# EUROPEAN PATENT APPLICATION

(11) **EP 4 583 519 A1**
(43) Date of publication of application: **09.07.2025**
(21) Application number: 23859386.7
(22) Date of filing: 30.08.2023
(51) Int. Cl.: H04N 21/4788

(54) **INFORMATION DISPLAY METHOD AND APPARATUS, AND ELECTRONIC DEVICE AND COMPUTER-READABLE MEDIUM**

(30) Priority: 30.08.2022 CN 202211050037
(71) Applicant: Beijing Zitiao Network Technology Co., Ltd., Beijing 100190 (CN)
(72) Inventor: WANG, Yaozheng, Beijing 100028 (CN)
(74) Representative: Dentons UK and Middle East LLP
(86) International application number: PCT/CN2023/115746
(87) International publication number: WO 2024/046357

(57) **Abstract**

Disclosed in the present application are an information display method and apparatus, and an electronic device and a computer-readable medium. The method comprises: when a streamer end displays a live-streaming video page and at least one piece of first interaction information is displayed on the live-streaming video page, receiving a trigger operation for the live-streaming video page at the streamer end, and then displaying an interaction information display page on the streamer end, wherein the interaction information display page is used for displaying at least one piece of second interaction information, such that after a trigger operation for an information screening control in the interaction information display page is received at the streamer end, a screening condition input interface is displayed, a condition input operation triggered for the screening condition input interface is received at the streamer end, and third interaction information, which meets the information screening condition, among pieces of second interaction information is displayed on the interaction information display page, and thus the third interaction information can meet interaction information screening requirements of a streamer, thereby facilitating an improvement in an information viewing experience of the streamer.

## Description

This application claims priority to Chinese Patent Application No. 202211050037.6, titled "INFORMATION DISPLAY METHOD AND APPARATUS, AND ELECTRONIC DEVICE AND COMPUTER-READABLE MEDIUM", filed on August 30, 2022, which is hereby incorporated by reference in its entirety.

### FIELD

The present disclosure relates to the field of Internet technology, and in particular to a method and apparatus for displaying information, an electronic device, and a computer-readable medium

### BACKGROUND

Live streaming is a kind of information publishing mode through the network which produces and publishes information synchronously with the occurrence and development of an event on the spot and has a two-way circulation process.

In some scenarios, when a streamer in a live stream room uses a client for live streaming, the streamer can not only browse a live streaming page on the client, but also browse interaction information (for example, comment information) displayed on the live streaming page.

In practice, an interaction information display solution applied to the live stream room has some disadvantages that cause bad experience to the streamer in the live stream room.

### SUMMARY

A method and apparatus for displaying information, an electronic device and a computer-readable medium are provided according to the present disclosure.

In order to achieve the above object, the following technical solutions are provided according to the present disclosure.

A method for displaying information, applied to a streamer client, is provided according to the present disclosure. The method includes:
displaying a live stream page, where at least one piece of first interaction information is displayed on the live stream page;
displaying an interaction information display page, in response to a trigger operation on the live stream page, where the interaction information display page is used to display at least one piece of second interaction information, and the at least one piece of second interaction information includes the at least one piece of first interaction information;
displaying a filter condition input interface, in response to a trigger operation on an information filter control on the interaction information display page; and
displaying, on the interaction information display page, third interaction information satisfying an information filter condition in the at least one piece of second interaction information, in response to a condition input operation triggered on the filter condition input interface, where the information filter condition is determined according to the condition input operation.

In a possible implementation, the filter condition input interface includes at least one piece of candidate condition description information.

The displaying, on the interaction information display page, third interaction information satisfying an information filter condition in the at least one piece of second interaction information, in response to a condition input operation triggered on the filter condition input interface includes:
displaying, on the interaction information display page, the third interaction information satisfying the information filter condition in the at least one piece of second interaction information, in response to a selection operation on target condition description information in the at least one piece of candidate condition description information, where the information filter condition is determined according to the target condition description information.

In a possible implementation, the at least one piece of candidate condition description information includes at least one of first condition description information, second condition description information, third condition description information, and fourth condition description information, where the first condition description information is used to describe a filter condition for searching for gift-giving interaction information in the at least one piece of second interaction information, the second condition description information is used to describe a filter condition for searching for gift-giving description information of at least one gift giver recorded in the at least one piece of second interaction information, the third condition description information is used to describe a filter condition for searching for interaction description information of at least one subscriber recorded in the at least one piece of second interaction information, and the fourth condition description information is used to describe a filter condition for searching for comment interaction information in the at least one piece of second interaction information.

In a possible implementation, the displaying, on the interaction information display page, third interaction information satisfying an information filter condition in the at least one piece of second interaction information, in response to a condition input operation triggered on the filter condition input interface includes:
displaying, on the interaction information display page, the third interaction information satisfying the information filter condition in the at least one piece of second interaction information, in response to the condition input operation triggered on the filter condition input interface; and displaying a condition display control corresponding to the information filter condition, where display content on the condition display control is determined according to the information filter condition.

In a possible implementation, the filter condition input interface includes at least one piece of candidate condition description information.

The displaying, on the interaction information display page, the third interaction information satisfying the information filter condition in the at least one piece of second interaction information, in response to the condition input operation triggered on the filter condition input interface; and displaying the condition display control corresponding to the information filter condition include:
displaying, on the interaction information display page, the third interaction information satisfying the information filter condition in the at least one piece of second interaction information, in response to a selection operation on at least one piece of target condition description information in the at least one piece of candidate condition description information; and displaying a condition display control corresponding to the target condition description information, where the information filter condition is determined according to the at least one piece of target condition description information, and display content on the condition display control corresponding to the target condition description information is determined according to the target condition description information; or
the displaying, on the interaction information display page, the third interaction information satisfying the information filter condition in the at least one piece of second interaction information, in response to the condition input operation triggered on the filter condition input interface; and displaying the condition display control corresponding to the information filter condition include:
   displaying, on the interaction information display page, the third interaction information satisfying the information filter condition in the at least one piece of second interaction information, in response to a selection operation on at least one piece of target condition description information in the at least one piece of candidate condition description information; and displaying the condition display control corresponding to the information filter condition, where the information filter condition is determined according to the at least one piece of target condition description information, and display content on the condition display control corresponding to the information filter condition is determined according to the at least one piece of target condition description information.

In a possible implementation, after displaying the condition display control corresponding to the information filter condition, the method further includes:
displaying the at least one piece of second interaction information on the interaction information display page and turning off the condition display control corresponding to the target condition description information, in response to a turn-off operation triggered on the condition display control corresponding to the information filter condition.

In a possible implementation, a turn-off control is displayed on the condition display control.

The displaying the at least one piece of second interaction information on the interaction information display page and turning off the condition display control corresponding to the target condition description information, in response to the turn-off operation triggered on the condition display control corresponding to the information filter condition include:
displaying the at least one piece of second interaction information on the interaction information display page and turning off the condition display control corresponding to the target condition description information, in response to a trigger operation on the turn-off control on the condition display control corresponding to the information filter condition.

In a possible implementation, at least one management control is further displayed on the condition display control, and the management control is used to adjust a display state of the condition display control on the interaction information display page.

In a possible implementation, a display position of the condition display control on the interaction information display page and a display position of the information filter control on the interaction information display page satisfy a preset position relationship.

In a possible implementation, the filter condition input interface includes at least one piece of candidate condition description information,
the information filter condition is determined, according to N pieces of target condition description information selected from the at least one piece of candidate condition description information, where N is a positive integer, and
a filtering process for the third interaction information includes:
   determining the n-th condition according to the n-th piece of target condition description information, where n is a positive integer and n≤N;
   filtering the at least one piece of second interaction information according to the n-th condition, to obtain second interaction information satisfying the n-th condition, where n is a positive integer and n≤N; and
   determining the second interaction information satisfying the n-th condition, as the third interaction information, where n is a positive integer and n≤N.

In a possible implementation, displaying the filter condition input interface includes:
displaying the filter condition input interface in a second region of the interaction information display page, and
the method further includes:
   removing display of the filter condition input interface, in response to a trigger operation on a third region of the interaction information display page, where there is no overlapping region between the third region and the second region.

In a possible implementation, after displaying the filter condition input interface, the method further includes:
removing display of the filter condition input interface, in response to a trigger operation on the information filter control in the interaction information display page.

In a possible implementation, the interaction information display page includes a first interaction display region,
the first interaction display region is used to display all fourth interaction information satisfying a preset display condition in the at least one piece of second interaction information in an information update display manner, in a case that an information co-occurrence parameter of the first interaction display region satisfies a preset parameter condition, and
after displaying the interaction information display page, the method further includes:
   updating interaction information displayed in the first interaction display region, in response to an information update operation triggered on the first interaction display region.

In a possible implementation, the interaction information display page further includes a second interaction display region and/or a third interaction display region, where the second interaction display region is used to display gift-giving interaction information satisfying a preset gift condition in the at least one piece of second interaction information, and the third interaction display region is used to display live streaming interaction information satisfying a preset interaction condition in the at least one piece of second interaction information.

In a possible implementation, after updating the interaction information displayed in the first interaction display region, the method further includes:
displaying an information prompt object on the interaction information display page, in response to receiving fifth interaction information satisfying a preset information condition.

In a possible implementation, after displaying the information prompt object on the interaction information display page, the method further includes:
updating the interaction information displayed in the first interaction display region with the fifth interaction information, in response to a trigger operation on the information prompt object.

In a possible implementation, a third interaction display region is further displayed on the interaction information display page, where the third interaction display region is used to display live streaming interaction information satisfying a preset interaction condition in the at least one piece of second interaction information, and
the displaying the information prompt object on the interaction information display page includes:
displaying the information prompt object in the third interaction display region.

In a possible implementation, the displaying the interaction information display page includes:
displaying the interaction information display page on the live stream page in a preset page display manner.

An apparatus for displaying information is further provided according to an embodiment of the present disclosure. The apparatus includes: a first display unit, a second display unit, a third display unit and a fourth display unit.

The first display unit is configured to display a live stream page, where at least one piece of first interaction information is displayed on the live stream page.

The second display unit is configured to display an interaction information display page, in response to a trigger operation on the live stream page, where the interaction information display page is used to display at least one piece of second interaction information, and the at least one piece of second interaction information includes the at least one piece of first interaction information.

The third display unit is configured to display a filter condition input interface, in response to a trigger operation on an information filter control on the interaction information display page.

The fourth display unit is configured to display, on the interaction information display page, third interaction information satisfying an information filter condition in the at least one piece of second interaction information, in response to a condition input operation triggered on the filter condition input interface, where the information filter condition is determined according to the condition input operation.

An electronic device is further provided according to the present disclosure. The device includes: a processor and a memory.

The memory is configured to store instructions or computer programs.

The processor is configured to execute the instructions or computer programs in the memory, to cause the electronic device to implement the method for displaying information according to the present disclosure.

A computer-readable medium with instructions or computer programs stored thereon is further provided according to the present disclosure, where the instructions or computer programs, when executed by a device, cause the device to implement the method for displaying information according to the present disclosure.

A computer program product is further provided according to the present disclosure, which includes a computer program carried on a non-transitory computer-readable medium, where the computer program includes program codes for performing the method for displaying information according to the present disclosure.

### BRIEF DESCRIPTION OF THE DRAWINGS

In order to more clearly illustrate the technical solutions in the embodiments of the present application or the related technology, the following will briefly introduce the drawings that need to be used in the description of the embodiments or the related technology. Apparently, the accompanying drawings in the following description are only some embodiments of the invention. Those skilled in the art can also obtain other drawings based on these drawings without creative work.
Figure 1 is a schematic diagram of a live stream page according to an embodiment of the present disclosure;
Figure 2 is a flow chart of a method for displaying information according to an embodiment of the present disclosure;
Figure 3 is a schematic diagram of another live stream page according to an embodiment of the present disclosure;
Figure 4 is a schematic diagram of an interaction information display page according to an embodiment of the present disclosure;
Figure 5 is a schematic diagram of an interaction information display page according to an embodiment of the present disclosure;
Figure 6 is a schematic diagram of an interaction information display page according to an embodiment of the present disclosure;
Figure 7 is a schematic diagram of an interaction information display page according to an embodiment of the present disclosure;
Figure 8 is a schematic diagram of an interaction information display page according to an embodiment of the present disclosure;
Figure 9 is a schematic diagram of an interaction information display page according to an embodiment of the present disclosure;
Figure 10 is a schematic diagram of an interaction information display page according to an embodiment of the present disclosure;
Figure 11 is a schematic diagram of an interaction information display page according to an embodiment of the present disclosure;
Figure 12 is a schematic diagram of an interaction information display page according to an embodiment of the present disclosure;
Figure 13 is a schematic diagram of an interaction information display page according to an embodiment of the present disclosure;
Figure 14 is a structural diagram of an apparatus for displaying information according to an embodiment of the present disclosure; and
Figure 15 is a structural diagram of an electronic device according to an embodiment of the present disclosure.

### DETAILED DESCRIPTION

In order to facilitate the understanding of the technical solution of the present application, some technical terms involved in the present application are introduced below.

A live viewer refers to a person who watches a live stream room by means of an electronic device. The live streaming viewer is not limited in the embodiments of the present disclosure, which, for example, may be a streamer in the live stream room or other users in the live stream room except the streamer.

The streamer client refers to a client corresponding to the streamer (that is, a user end corresponding to the streamer), or an electronic device used by the streamer when live streaming.

A subscriber refers to a live viewer who has subscribed to a live stream room (that is, a live viewer who has triggered a subscription operation on the live stream room).

Based on the above technical terms, the technical solutions of the present disclosure are described below.

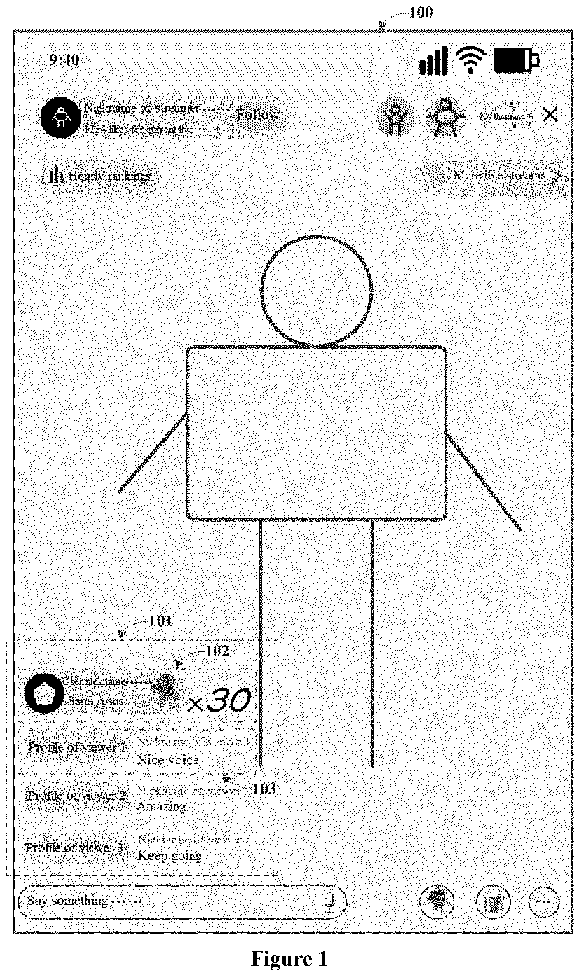

The inventor finds out that, in some interaction information display solutions applied to live stream rooms, for a client used by a streamer in the live stream room, when a display page (for example, page 100 shown in Figure 1) for the live stream room is displayed on the client, if some interaction information (for example, gift-giving information and/or comment information posted in real time by a viewer of the live stream room) is displayed in a certain region (for example, region 101 shown in Figure 1) of the display page, the streamer can usually only view the interaction information within this region. Due to the limited space of this region, only some interaction information posted relatively late (for example, interaction information posted in real time) can be displayed in this region. Therefore, the information displayed in this region cannot meet certain information viewing demand of the streamer (for example, the demand to view some interaction information that is posted earlier), resulting in a poor information viewing experience of the streamer.

Based on the above findings, in order to solve the technical problem in the background, a method for display information is provided according to the embodiments of the present disclosure, which is applied to a streamer client. In the method, for a streamer client used by a streamer, when a live stream page is displayed on the streamer client and at least one piece of first interaction information (for example, comment information and gift-giving information posted in real time) is displayed on the live stream page, an interaction information display page is displayed on the streamer client after the streamer client receives a trigger operation on the live stream page. The interaction information display page is used to display at least one piece of second interaction information (for example, all posted comment information and gift-giving information). The streamer client displays a filter condition input interface after receiving a trigger operation on an information filter control on the interaction information display page. Then, the streamer client displays on the interaction information display page third interaction information satisfying an information filter condition in the second interaction information upon receiving a condition input operation triggered on the filter condition input interface. As the information filter condition is determined according to the condition input operation, the third interaction information obtained by filtering with the information filter condition can satisfy an interaction information filter demand of the streamer, thereby facilitating improving information viewing experience of the streamer.

In addition, because the filter condition input interface can be displayed or cannot be displayed in response to the trigger operation on the information filter control, the filter condition input interface can be displayed in response to a user demand. Thus, the filter condition input interface will not always occupy space resources of the interaction information display page. In this way, blocking of the interaction information display page by the filter condition input interface can be effectively reduced, thereby effectively improving the information viewing experience of the streamer for the interaction information display page.

Moreover, as the information filter condition is determined according to the condition input operation triggered by the streamer on the filter condition input interface, the information filter condition may be a simple condition or a compound condition. Thus, the information filter condition can better fulfil the interaction information filter demand of the streamer, thereby facilitating improving the information viewing experience of the streamer.

Furthermore, an executive subject of the above method for displaying information is not limited in the embodiments of the present disclosure. For example, the method for displaying information according to the embodiments of the present disclosure may be performed by an electronic device, which includes but is not limited to a smart phone, a tablet computer, a notebook computer, or a personal digital assistant (PDA).

In order to enable those skilled in the art to better understand the solution of the present disclosure, the technical solution in the embodiments of the disclosure are clearly and completely described below in conjunction with the accompanying drawings in the embodiments of the disclosure. Apparently, the described embodiments are only some rather than all of the embodiments of the invention. All other embodiments obtained by a person of ordinary skill in the art based on the embodiments in this disclosure without any creative efforts shall fall within the scope of the present disclosure.

In order for better understanding of the technical solution according to the present disclosure, the method for displaying information according to the present disclosure are described below with reference to some drawings.

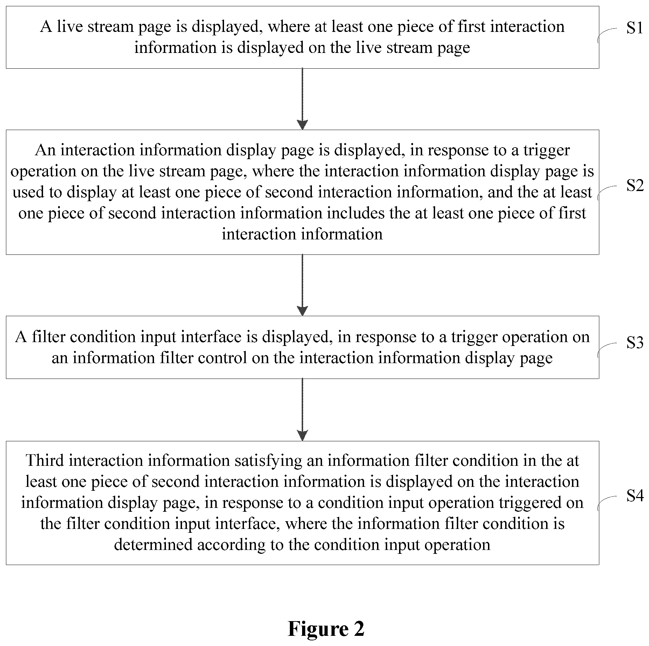

As shown in Figure 2, a method for displaying information is provided according to an embodiment of the present disclosure, which is applied to a streamer client. The method includes the following S1 to S4.

In S1, a live stream page is displayed, where at least one piece of first interaction information is displayed on the live stream page.

The live stream page is used to display a live status of a live stream room. For example, the live stream page may be the page 100 shown in Figure 1.

In addition, in order to better improve live streaming effects, at least one piece of first interaction information (for example, gift-giving information and comment information shown in region 101 in Figure 1) may be displayed on the above live stream page. The first interaction information can represent interaction information (especially, interaction information posted in real time) posted for the live stream room by a viewer of the live stream room.

The first interaction information refers to interaction information displayed on the live stream page. The interaction information refers to information posted for the live stream room by the viewer of the live stream room, which is not limited in the embodiment of the present disclosure. For example, the interaction information may be gift-giving information (for example, information in the region 102 as shown in Figure 1) describing a gift-giving status corresponding to the streamer in the live stream room, or comment information (for example, information in the region 103 as shown in Figure 1) representing viewpoints of the viewer in the live stream room.

In addition, the first interaction information is not limited in the embodiment of the present disclosure, which, for example, may be gift-giving information (for example, the information in the region 102 as shown in Figure 1) that meets a preset gift condition. The preset gift condition may be set in advance according to an application scenario, which, for example, may be: a posted time not exceeding a preset duration threshold (for example, 1 minute) and a sent gift in a preset gift type (for example, a gift type of flying wheat). The preset duration threshold may be set in advance. In another example, the first interaction information may be comment information posted relatively late (for example, the information in the region 103 as shown in Figure 1).

In addition, the "at least one piece of first interaction information" is not limited in the embodiment of the present disclosure, which, for example, may include at least one of: Q pieces of comment information (for example, the three pieces of comment information as shown in Figure 1) that are posted most recently, and gift-giving information (for example, gift-giving information in the region 102 as shown in Figure 1) satisfying the preset gift condition. The preset gift condition may be set in advance according to an application scenario, which, for example, may be: a posted time not exceeding a preset duration threshold (for example, 1 minute) and a sent gift in a preset gift type (for example, a gift type of flying wheat). The preset duration threshold may be set in advance.

Based on the above relevant description of S1, for a streamer client used by a streamer in a live stream room, when the live stream page of the live stream room is displayed on the streamer client, if at least one piece of first interaction information (for example, gift-giving information that meets the preset gift condition and comment information posted in real time) is displayed in a preset region on the live stream page, the streamer can learn, from the live stream page, a live status of the live stream room, and interaction information (for example, gift-giving information satisfying the preset gift condition and some comment information posted relatively late) posted for the live stream room by the viewer of the live stream room in real time.

In S2, an interaction information display page is displayed, in response to a trigger operation on the live stream page, where the interaction information display page is used to display at least one piece of second interaction information, and the at least one piece of second interaction information includes the at least one piece of first interaction information.

The "trigger operation on the live stream page" is used to trigger a displaying process for the interaction information display page. The implementation of the "trigger operation on the live stream page" is not limited in the embodiment of the present disclosure, which is described with reference to the following two circumstances for ease of understanding.

In a first circumstance, in some application scenarios, the "trigger operation on the live stream page" may be implemented as a click operation on a control deployed on the live stream page.

Based on the above first circumstance, a possible implementation of the above "trigger operation on the live stream page" is provided according to an embodiment of the present disclosure. In this implementation, when an information viewing control is deployed on the above live stream page, the "trigger operation on the live stream page" may be a trigger operation (for example, a click operation) on the information viewing control on the live stream page.

In a second circumstance, in a consideration that the live stream page has limited space, the "trigger operation on the live stream page" may be implemented as a gesture (for example, a sliding-to-right gesture indicated by the dotted line 301 as shown in Figure 1), in order to avoid burden on space usage of the live stream page.

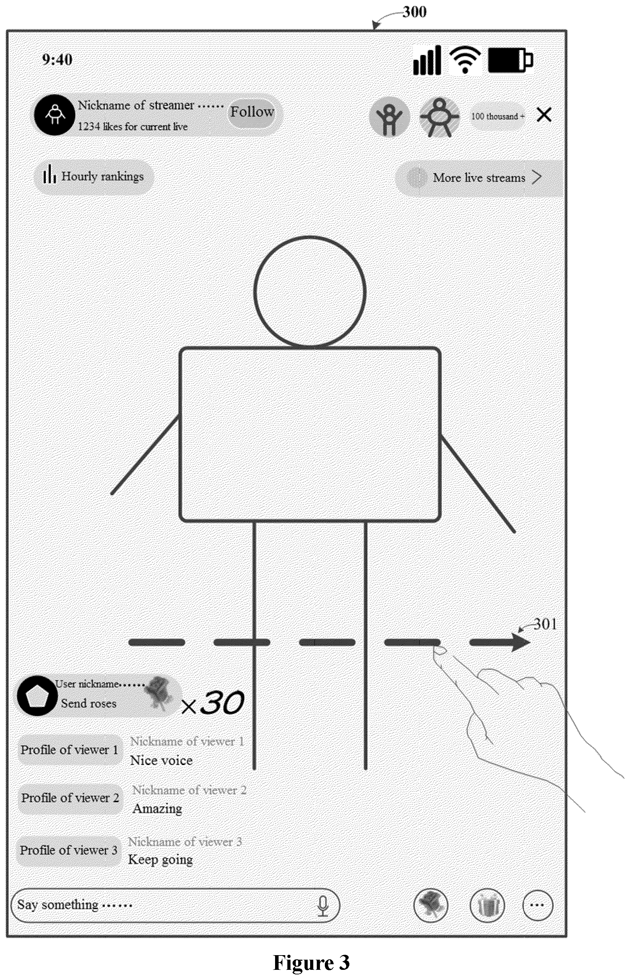

Based on the above second circumstance, another possible implementation of the above "trigger operation on the live stream page" is provided according to an embodiment of the present disclosure, which may be a sliding operation in a first direction on the live stream page. The first direction may be set in advance. For example, the first direction may be a direction indicated by the dotted line 301 in Figure 3.

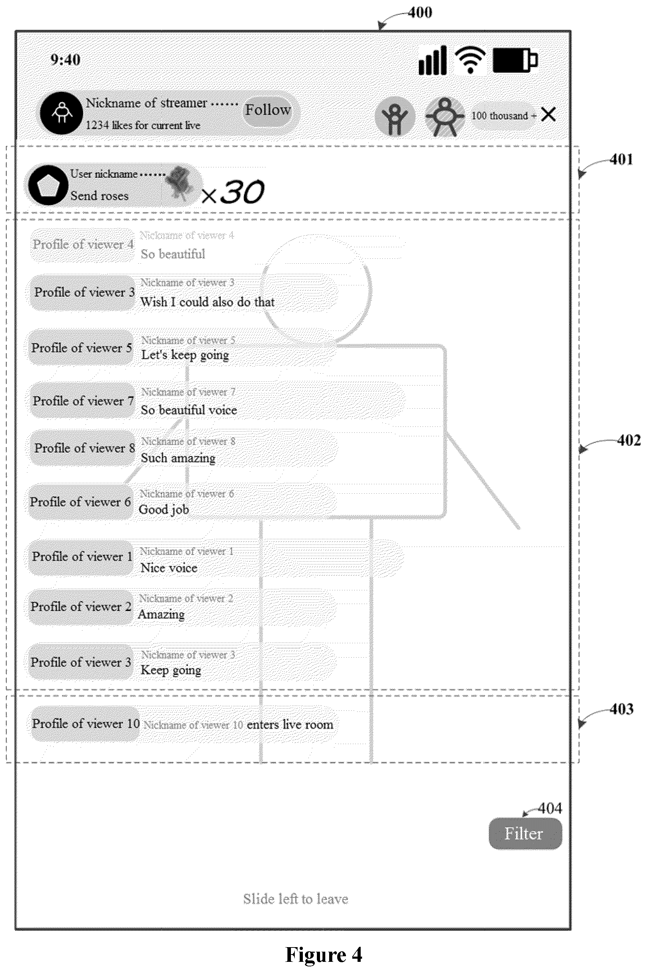

The above "interaction information display page" refers to a page displayed on the streamer client for better displaying interaction information, which, for example, may be a page 400 shown in Figure 4.

In addition, the interaction information display page may be used to display at least one piece of second interaction information, such that the interaction information display page can better display a large amount of interaction information (for example, all interaction information) posted for the live stream room by the viewer of the live stream room. The second interaction information refers to interaction information that can be displayed on the interaction information display page.

In addition, the second interaction information is not limited in the embodiments of the present disclosure, which, for example, may be gift-giving information that meets a preset gift condition (for example, information in the region 401 as shown in Figure 4). In another example, the second interaction information may be comment information (for example, information in the region 402 as shown in Figure 4). In another example, the second interaction information may be live streaming interaction information that meets a preset interaction condition (for example, information in the region 403 as shown in Figure 4). The preset interaction condition may be set in advance, which, for example, may be prompt message indicating that a certain user enters the live stream room.

Moreover, the above "at least one piece of second interaction information" is not limited in the embodiment of the present disclosure, which, for example, may include the at least one piece of first interaction information (that is, the interaction information in a display state on the live stream page), and seventh interaction information posted earlier than all the first interaction information on the live stream page. Thus, the streamer can learn, from the "at least one piece of second interaction information", some interaction information currently displayed on the live stream page, as well as some interaction information which has been displayed on the live stream page.

The seventh interaction information is used to indicate historical interaction information corresponding to the at least one piece of first interaction information, and a posting time of the seventh interaction information on the live stream page is earlier than that of all the first interaction information on the live stream page. It should be noted that a posting time of a piece of interaction information on the live stream page refers to a time when the piece of interaction information starts to be displayed on the live stream page.

In addition, the above seventh interaction information is not limited in the embodiment of the present disclosure, which, for example, may include all interaction information which has been posted for the live stream room by the viewer of the live stream room within a historical time period. The historical time period refers to a time interval of [a start time of the live stream room, a posting time of earliest posted first interaction information), which is a left-closed and right-open interval.

In fact, in order to ensure that the above live stream page can display as much information as possible, a relatively small region (for example, region 101 shown as in Figure 1) on the live stream page is used to display the at least one piece of first interaction information, which leads to a poor display effect of the first interaction information (for example, small font size, and small spacing between different pieces of interaction information). Thus, information viewing experience of the streamer for the first interaction information is poor.

Based on the above paragraph, in order to better improve information viewing experience of the streamer for the above "at least one piece of first interaction information", a possible implementation of the above "interaction information display page" is further provided according to an embodiment of the present disclosure. In this embodiment, the at least one piece of first interaction information is displayed on the live stream page in a first information display manner. When the at least one piece of first interaction information is being displayed on the interaction information display page, the at least one piece of first interaction information may be displayed on the interaction information display page in a second information display manner, such that a display effect of the at least one piece of first interaction information on the interaction information display page is superior to that of the at least one piece of first interaction information on the live stream page (for example, larger font size, and larger spacing between different pieces of interaction information).

The first information display manner refers to a manner (for example, an information display manner in the region 101 as shown in Figure 1) for displaying the at least one piece of first interaction information on the live stream page. The first information display manner is not limited in the embodiment of the present disclosure, which, for example, may include at least one of a first font parameter and a first information spacing parameter. The first font parameter refers to a font for displaying the at least one piece of first interaction information on the live stream page, which is not limited in the embodiment of the present disclosure. For example, the first font parameter may include a first font size. The first information spacing parameter is used to indicate spacing between any two adjacent pieces of interaction information when the at least one piece of first interaction information is displayed on the live stream page.

The second information display manner refers to a manner (for example, an information display manner on the page 400 as shown in Figure 4) for displaying the at least one piece of first interaction information on the interaction information display page. The second information display manner is not limited in the embodiments of the present disclosure, which, for example, may include at least one of a second font parameter and a second information spacing parameter. The second font parameter refers to a font for displaying the at least one piece of first interaction information on the interaction information display page, which is not limited in the embodiment of the present disclosure. For example, the second font parameter may include a second font size, where a character displayed in the second font size is larger than the character displayed in the first font size. The second information spacing parameter is used to indicate spacing between any two adjacent pieces of interaction information when the at least one piece of first interaction information is displayed on the interaction information display page, where spacing between two adjacent pieces of interaction information displayed according to the second information spacing parameter is larger than spacing between two adjacent pieces of interaction information displayed according to the first information spacing parameter.

Based on the above four paragraphs, in some application scenarios, for the streamer client used by the streamer in the live stream room, the live stream page is displayed on the streamer client, and at least one piece of first interaction information is displayed on the live stream page in the first information display manner. In this case, after receiving a trigger operation (for example, sliding to the right) on the live stream page, the streamer client displays the interaction information display page, such that the at least one piece of first interaction information can be displayed on the interaction information display page in the second information display manner. Thus, a display effect of the at least one piece of first interaction information on the interaction information display page is better than that of the at least one piece of first interaction information on the live stream page, which is beneficial to improving information viewing experience of the streamer for the first interaction information.

In addition, an implementation of the above "interaction information display page" is not limited in the embodiments of the present disclosure, which, for example, may be implemented by using any page capable of displaying the at least one piece of second interaction information in the related technology or the future technology.

Besides, a display manner of the above "interaction information display page" is not limited in the embodiments of the present disclosure, which, for example, may be implemented by using any page display manner in the related technology or the future technology.

In fact, in order to better improve the information viewing experience of the streamer, the interaction information display page may be displayed without leaving the live stream page. Based on this, a possible implementation of the display manner of the above "interaction information display page" is further provided according to an embodiment of the present disclosure. The possible implement may include: displaying the interaction information display page on the live stream page in a preset page display manner, to achieve the object that the streamer can view the interaction information provided on the interaction information display page without leaving the live stream page. In this way, adverse effects (such as, missing some important live streaming content) caused by leaving the live stream page can be effectively avoided, which helps improve the information viewing experience of the streamer. The preset page display manner may be set in advance.

Moreover, the above preset page display manner is not limited in the embodiment of the present disclosure, which, for example, may be implemented by using a pull-down page as a display manner. That is, in a possible implementation, when the live stream page is displayed on the streamer client, after receiving the trigger operation on the live stream page, the streamer client may display the interaction information display page on the live stream page, as a pull-down page. In this way, the streamer client can display the interaction information display page while displaying the live stream page.

In fact, in order to better improve the information display effect, the above preset page display manner may also be implemented by using a transparent floating layer (for example, a transparent floating layer as shown in Figure 4) as a display manner. That is, in a possible implementation, when the live stream page is displayed on the streamer client, after receiving the trigger operation on the live stream page, the streamer client may add a transparent floating layer on the live stream page, and display the interaction information display page on the transparent floating layer. Thus, a live status dynamically displayed on the live stream page can be used as a background of the interaction information display page. In this way, the live stream page and the interaction information display page can both be displayed at the same time. The transparent floating layer refers to a page layer that is on top of the live stream page but does not affect the display of the live status of the live stream page for the user.

In addition, a size of the above transparent floating layer is not limited in the embodiment of the present disclosure, which, for example, may be consistent with a size of the live stream page. In another example, the size of the transparent floating layer may be smaller than the size of the live stream page.

Based on the relevant content of S2 above, for the streamer client used by the streamer in the live stream room, the streamer client is displaying the live stream page (for example, the page 300 as shown in Figure 3) of the live stream room, and at least one piece of first interaction information (for example, the gift-giving information that meets the preset gift condition, and some comment information posted relatively late) is displayed on the live stream page. In this case, after the streamer client receives the trigger operation (for example, a sliding operation in a direction indicated by the dotted line 301 as shown in Figure 3) on the live stream page, the interaction information display page (for example, the page 400 as shown in Figure 4) is displayed on the streamer client, and the interaction information display page is used to display at least one piece of second interaction information (for example, all comment information and gift information that have been posted). The second interaction information includes not only the first interaction information in a display state on the live stream page, but also the seventh interaction information (that is, interaction information previously displayed on the live stream page) posted earlier than the first interaction information. Thus, the second interaction information can more comprehensively represent the interaction information posted for the live stream room by the viewer of the live stream room, such that the streamer can learn, from the interaction information display page, more interaction information posted for the live stream room by the viewer of the live stream room. In this way, the second interaction information can better meet the information viewing demand (for example, viewing interaction information posted in real time, or posted historical interaction information) of the streamer, and thus the information viewing experience of the streamer can be effectively improved.

In S3, a filter condition input interface is displayed, in response to a trigger operation on an information filter control on the interaction information display page.

The information filter control is used to provide an information filter service for the above "at least one piece of second interaction information" to the streamer.

In addition, the information filter control is not limited in the embodiment of the present disclosure, which, for example, may be implemented as the control 404 shown in Figure 4.

In addition, a display position of the information filter control on the interaction information display page is not limited in the embodiment of the present disclosure. For example, as shown in Figure 4, the information filter control may be deployed at the bottom right corner of the interaction information display page.

Moreover, the trigger operation on the information filter control is not limited in the embodiment of the present disclosure, which, for example, may be a click operation.

The above "filter condition input interface" is used to provide a filter condition input service to the streamer, such that the streamer can use the filtering condition input interface to input a filter condition for performing information filtering on the "at least one piece of second interaction information".

In addition, the filter condition input interface is not limited in the embodiment of the present disclosure, which, for example, may be implemented using any interface that can provide the filter condition input service in the related technology or the future technology.

In fact, a research has found that a streamer in live streaming usually does not perform complex filtering on the above "at least one piece of second interaction information", but simply needs to view certain types of interaction information (for example, gift-giving information, interaction information of subscribers, gift-giving status of gift givers, or comment information).

Based on the above findings, in order to reduce the complexity of filtering as much as possible on the premise of meeting the information viewing demand of the streamer, a possible implementation of the above filter condition input interface is further provided according to an embodiment of the present disclosure. In this implementation, the filter condition input interface may include at least one piece of candidate condition description information. The i-th piece of candidate condition description information is used to describe a filter condition for the i-th type of interaction information, where i is a positive integer, i≤I , I is a positive integer, and I represents the number of pieces of information in the at least one piece of candidate condition description information.

In addition, the above "at least one piece of candidate condition description information" is not limited in the embodiment of the present disclosure, which, for example, may be set in advance according to an application scenario. For ease of understanding, the following descriptions are given in combination with some examples.

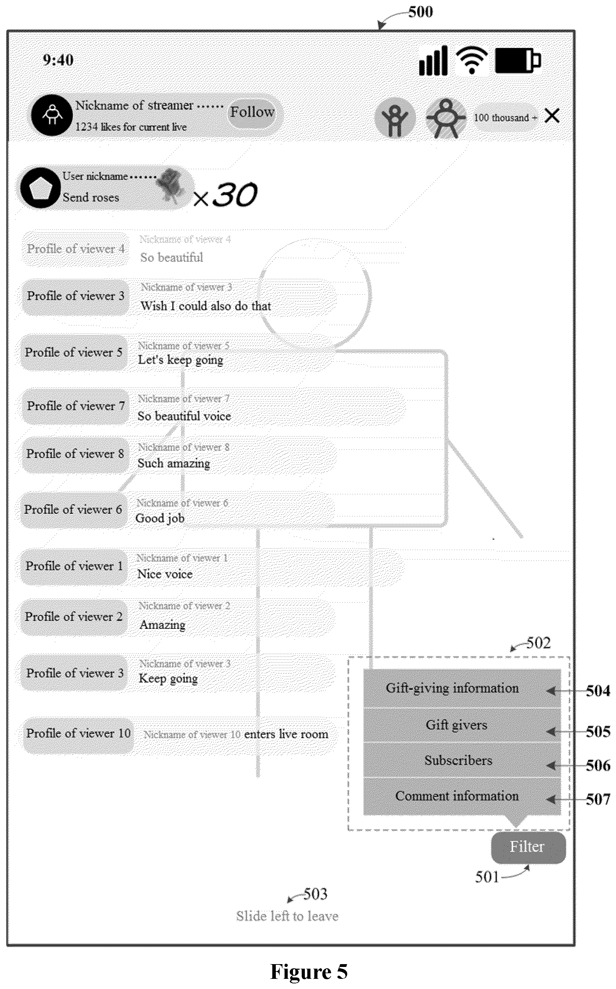

As an example, in some application scenarios (for example, the streamer pays more attention to some scenarios, such as gift-giving information, interaction information of subscribers, a gift-giving status of gift givers, or comment information), the "at least one piece of candidate condition description information" may include at least one of: first condition description information (for example, information in region 504 as shown in Figure 5), second condition description information (for example, information in region 505 as shown in Figure 5), third condition description information (for example, information in region 506 as shown in Figure 5) and fourth condition description information (for example, information in region 507 as shown in FIG. 5 ).

The first condition description information is used to describe a filter condition for searching for gift-giving interaction information from the at least one piece of second interaction information. An implementation of the first condition description information is not limited in the embodiment of the present disclosure, which, for example, may be implemented as the string "gift-giving information" in region 504 as shown in Figure 5.

For the first condition description information (for example, the string "gift-giving information" in region 504 as shown in Figure 5), after receiving a selection operation on the first condition description information (for example, a click operation triggered on region 504 in Figure 5), the streamer client can display, by using the interaction information display page (especially, by using the first interaction display region on the interaction information display page), at least one piece of gift-giving interaction information (for example, all gift-giving information) in the at least one piece of second interaction information, thereby satisfying the information viewing demand of the streamer for viewing all posted gift-giving information.

The second condition description information is used to describe a filter condition for searching for gift-giving description information of at least one gift giver recorded in the at least one piece of second interaction information. The second condition description information is not limited in the embodiment of the present disclosure, which, for example, may be implemented as the string "gift givers" in region 505 as shown in Figure 5.

For the second condition description information (for example, the string "gift givers" in region 505 as shown in Figure 5), after receiving a selection operation on the second condition description information (for example, a click operation triggered on region 505 in Figure 5), the streamer client can display, by using the interaction information display page (especially, by using the first interaction display region on the interaction information display page), the gift-giving description information (for example, which gifts are sent by gift giver 1 to the streamer, or which gifts are sent by gift giver 2 to the streamer, ...) of the at least one gift giver recorded in the at least one piece of second interaction information, thereby satisfying the information viewing demand of the streamer for separately viewing a gift-giving status of each gift giver. Gift-giving description information of the j-th gift-giver is used to describe a gift-giving status of the j-th gift-giver for the streamer (for example, which gift is sent, or when each gift is sent), where j is a positive integer, j≤J, J is a positive integer, and J represents the total number of gift givers involved in at least one piece of second interaction information above.

The third condition description information is used to describe a filter condition for searching for interaction description information of at least one subscriber recorded in the above at least one piece of second interaction information. An implementation of the third condition description information is not limited in the embodiment of the present disclosure, which, for example, may be implemented as the string "subscribers" in region 506 as shown in Figure 5.

For the third condition description information (for example, the string "subscribers" in region 506 in Figure 5), after receiving a selection operation on the third condition description information (for example, a click operation triggered on region 506 in Figure 5), the streamer client can display, by using the interaction information display page (especially, by using the first interaction display region on the interaction information display page), the interaction description information (for example, which gifts are sent by subscriber 1 to the streamer or what comments are posted by subscriber 1, or which gifts are sent by subscriber 2 to the streamer or what comments are posted by subscriber 2, ...) of the at least one subscriber recorded in the at least one piece of second interaction information, thereby satisfying the information viewing demand of the streamer for separately viewing an interaction status of each subscriber in the live stream room. Interaction description information of the k-th subscriber is used to describe an interaction status (for example, which gifts are sent, when each gift is sent, which comments are posted, or when each comment was posted) between the k-th subscriber and the streamer in the live stream room, where k is a positive integer, k≤K, K is a positive integer, and K represents the total number of subscribers involved in at least one piece of second interaction information above.

The fourth condition description information is used to describe a filter condition for searching for comment interaction information from at least one piece of second interaction information above. An implementation of the fourth condition description information is not limited in the embodiment of the present disclosure, which, for example, may be implemented as the string "comment information" in region 507 as shown in Figure 5.

For the fourth condition description information (for example, the string "comment information" in region 507 as shown in Figure 5), after receiving a selection operation on the fourth condition description information (for example, a click operation triggered on region 507 in Figure 5), the streamer client can display, by using the above interaction information display page (especially, by using the first interaction display area on the interaction information display page), at least one piece of comment interaction information in the at least one piece of second interaction information, thereby satisfying the information viewing demand of the streamer for separately viewing the posted comment information.

Based on the relevant description of the first to fourth condition description information above, in some application scenarios (for example, the streamer sometimes wants to view only gift-giving information, only a gift-giving status of each gift giver, only an interaction status of each subscriber or only comment information), for the filter condition input interface (for example, the interface 502 as shown in Figure 5) displayed on the streamer client, the filter condition input interface may include the first condition description information (for example, the information in region 504 in Figure 5), the second condition description information (for example, the information in region 505 in Figure 5), the third condition description information (for example, the information in region 506 in Figure 5 ), and the fourth condition description information (for example, the information shown in region 507 in Figure 5). The streamer can quickly search for the interaction information he needs to view, with these options displayed on the filter condition input interface, thereby facilitating improving the information viewing experience of the streamer.

In addition, a display manner of the filter condition input interface is not limited in the embodiment of the present disclosure, which, for example, may be implemented by using any interface display manner in the related technology or the future technology.

In fact, in order to better improve the information viewing experience of the streamer, another possible implementation of the display manner of the filter condition input interface is further provided according to an embodiment of the present disclosure. The possible implementation may include: displaying the filter condition input interface on the interaction information display page. In this way, the filter condition input interface can be displayed without leaving the interaction information display page, thereby achieving information filter processing without leaving the interaction information display page.

In addition, a display position of the filter condition input interface on the interaction information display page is not limited in the embodiment of the present disclosure. For example, a distance between the display position of the filter condition input interface on the interaction information display page and the display position of the information filter control on the interaction information display page is smaller than a preset distance threshold. In another example, the display position of the filter condition input interface on the interaction information display page may be a position indicated by the interface 502 as shown in Figure 5.

Based on the relevant description of S3, for the streamer client used by the streamer in the live stream room, the interaction information display page (for example, the page 400 shown in Figure 4) is displayed on the streamer client, and the information filter control (for example, the control 404 shown in Figure 4) is displayed on the interaction information display page. In this case, after receiving a trigger operation (for example, a click operation) on the information filter control, the streamer client may display the filter condition input interface (for example, the interface 502 in Figure 5) on the interaction information display page. Thus, the streamer can input a filtering condition he needs to use on the filter condition input interface.

In S4, third interaction information satisfying an information filter condition in the at least one piece of second interaction information is displayed on the interaction information display page, in response to a condition input operation triggered on the filter condition input interface, where the information filter condition is determined according to the condition input operation.

The condition input operation is used to trigger the filtering processing on the at least one piece of second interaction information above, which will not be limited in the embodiment of the present disclosure. For ease of understanding, the following description is given in conjunction with a possible implementation of S4.

In a possible implementation, when the filter condition input interface includes at least one piece of candidate condition description information, S4 may further include: displaying, on the interaction information display page, third interaction information satisfying an information filter condition in the at least one piece of second interaction information, in response to a selection operation on target condition description information in the at least one piece of candidate condition description information, where the target condition description information refers to selected candidate condition description information.

It should be noted that the above "selection operation on target condition description information in the at least one piece of candidate condition description information" is not limited in the embodiment of the present disclosure, which, for example, may be a click operation on region 504 as shown in Figure 5.

Based on the above two paragraphs, when the filter condition input interface includes at least one piece of candidate condition description information, the above "condition input operation triggered on the filter condition input interface" may refer to the selection operation on the target condition description information in the at least one piece of candidate condition description information.

The third interaction information is used to represent information that satisfies the information filter condition in the second interaction information. The determination process of the third interaction information is not limited in the embodiments of the present disclosure, which, for example, may include: determining whether the y-th piece of second interaction information satisfies the information filter condition; if the y-th piece of second interaction information satisfies the information filter condition, determining the y-th piece of second interaction information to be the third interaction information; otherwise, discarding the y-th piece of second interaction information, where y is a positive integer, y≤Y, Y is a positive integer, and Y represents the number of pieces of second interaction information. The information filter condition refers to a condition for performing the filtering processing on the above "at least one piece of second interaction information".

In addition, the information filter condition is determined according to the condition input operation. For example, in the case that the condition input operation is a selection operation on the target condition description information in the at least one piece of candidate condition description information, the information filter condition may be determined according to the target condition description information. Thus, the information filter condition can be used for obtaining interaction information satisfying the filter condition indicated by the target condition description information from the above "at least one piece of second interaction information".

In addition, the implementation of "determining the information filter condition according to the target condition description information" is not limited in the embodiment of the present disclosure, which, for example, may include: searching for a filter condition corresponding to the target condition description information from a pre-established mapping relationship; and determining the filter condition as the information filter condition, where the mapping relationship is used to record filter conditions corresponding to respective pieces of candidate condition description information.

Moreover, the above mapping relationship is not limited in the embodiment of the present disclosure. For example, in the case that the above "at least one piece of candidate condition description information" includes the first condition description information, the second condition description information, the third condition description information, and the fourth condition description information, the mapping relationship may include a correspondence relationship between the first condition description information and a first filter condition, a correspondence relationship between the second condition description information and a second filter condition, a correspondence relationship between the third condition description information and a third filter condition, and a correspondence relationship between the fourth condition description information and a fourth filter condition. The first filter condition refers to a filter condition for searching for the gift-giving interaction information from the at least one piece of second interaction information. The second filtering condition refers to a filter condition for searching for the gift-giving description information of the at least one gift giver recorded in the at least one piece of second interaction information. The third filter condition refers to a filter condition for searching for the interaction description information of the at least one subscriber recorded in the at least one piece of second interaction information. The fourth filter condition refers to a filter condition for searching for the comment interaction information from the at least one piece of second interaction information.

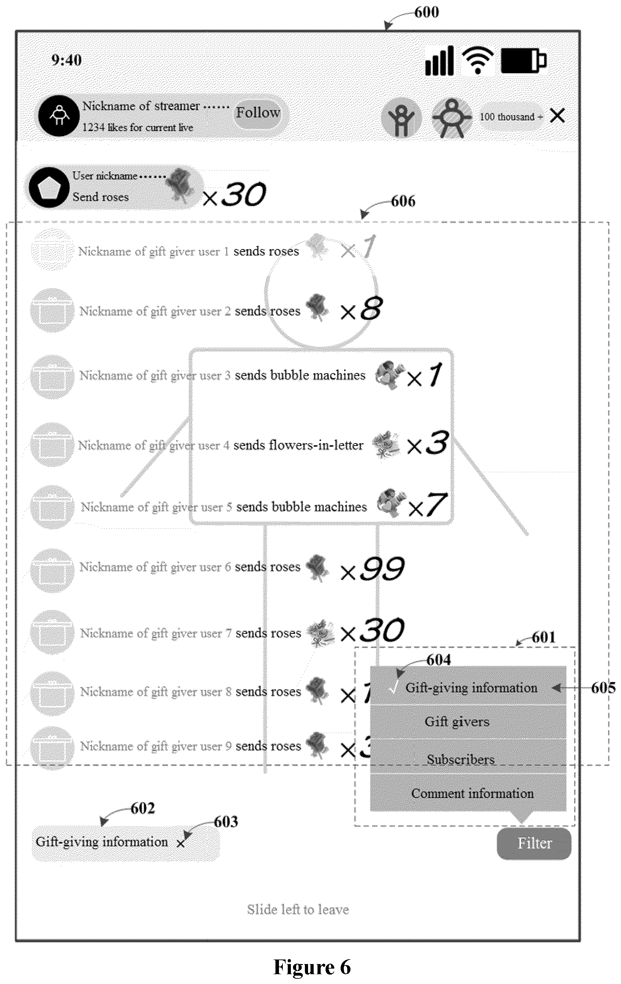

In fact, in order to better improve information filtering experience of the streamer, another possible implementation of S4 is further provided according to an embodiment of the present disclosure, which may include: displaying, on the interaction information display page, third interaction information satisfying an information filter condition in the at least one piece of second interaction information, in response to a selection operation on the target condition description information in the at least one piece of candidate condition description information; and displaying the target condition description information on the filter condition input interface in a preset marking manner (for example, the information display manner as shown in region 605 in Figure 6), where the preset marking manner refers to marking selected candidate condition description information with a marker set in advance (for example, the marker 604 shown in Figure 6).

In fact, in order to better improve the information filtering experience of the streamer, another possible implementation of S4 is further provided according to an embodiment of the present disclosure, which may include: displaying, on the interaction information display page, third interaction information satisfying an information filter condition in the at least one piece of second interaction information, in response to the condition input operation triggered on the filter condition input interface; and displaying a condition display control corresponding to the information filter condition, where display content on the condition display control is determined according to the information filter condition.

The above "condition display control corresponding to the information filter condition" is used to display relevant content of the information filter condition. The display content on the condition display control corresponding to the information filter condition is not limited in the embodiment of the present disclosure. For example, when the information filter condition is determined according to the above target condition description information, the target condition description information may be determined as the display content on the condition display control. In another example, when the information filter condition is determined according to the above target condition description information, information having the same semantics as the target condition description information may be determined as the display content on the condition display control. In another example, when the information filter condition is determined according to the above target condition description information, summary information may be extracted from the target condition description information and the extracted summary information may be determined as the display content on the condition display control.

Furthermore, an implementation of the "condition display control corresponding to the information filter condition" is not limited in the embodiment of the present disclosure. For example, when the information filter condition is determined according to the above target condition description information and the target condition description information is the string "gift-giving information" as shown in region 605 in Figure 6, the condition display control corresponding to the target condition description information may be a control 602 in Figure 6, and the string "gift-giving information " is displayed on the control 602.

In addition, a display position of the above "condition display control corresponding to the information filter condition" on the interaction information display page is not limited in the embodiment of the present disclosure. For example, when the information filter condition is determined according to the above target condition description information, the display position of the condition display control corresponding to the information filter condition on the interaction information display page and a display position of the above information filter control on the interaction information display page meet a preset position relationship. The preset position relationship may be set in advance. For example, as shown in Figure 6, the preset position relationship may be that the display position of the condition display control corresponding to the target condition description information on the interaction information display page, and the display position of the information filter control on the interaction information display page are on the same horizontal line, and the condition display control corresponding to the target condition description information is located on the left of the condition display control.

In fact, in order to better improve the information filtering experience of the streamer, the streamer may cancel the filtering processing according to the condition described in the target condition description information, by using the condition display control corresponding to the target condition description information. Based on this, a function of the above condition display control is further provided according to an embodiment of the present disclosure, which may include: after finishing the above S4, displaying the at least one piece of second interaction information on the interaction information display page and turning off the condition display control corresponding to the target condition description information, in response to a turn-off operation triggered on the condition display control corresponding to the information filter condition.

The turn-off operation may be set in advance, which is not limited in the embodiments of the present disclosure. For example, the turn-off operation may be any operation capable of performing turn-off processing on a control.

In addition, in order to better improve the information filtering experience of the streamer, another possible implementation of the condition display control corresponding to the information filter condition is further provided according to an embodiment of the present disclosure. In this implementation, the relevant content of the information filter condition and a turn-off control are both displayed on the condition display control (for example, the control 603 in Figure 6). Thus, the streamer can not only know the target condition description information from the condition display control, but also quickly remove the filter condition indicated by the target condition description information by using the turn-off control.

Based on this, a function of the condition display control corresponding to the information filter condition is further provided according to an embodiment of the present disclosure. When the turn-off control is displayed on the condition display control corresponding to the information filter condition, the function may include: after finishing the above S4, displaying the at least one piece of second interaction information on the interaction information display page and turning off the condition display control corresponding to the target condition description information, in response to a trigger operation (for example, a click operation) on the turn-off control in the condition display control corresponding to the information filter condition.

In addition, in order to better improve the information filtering experience of the streamer, another possible implementation of the condition display control corresponding to the information filter condition is further provided according to an embodiment of the present disclosure. In this implementation, both the turn-off control and at least one management control may be displayed on the condition display control. The management control may be used to adjust a displaying state (for example, a position and a size) of the condition display control on the interaction information display page. It should be noted that the at least one management control is not limited in the embodiments of the present disclosure, which, for example, may include a position adjustment control and a size adjustment control. The position adjustment control is configured to adjust a position of the condition display control on the interaction information display page. The size adjustment control is configured to adjust a size of the condition display control.

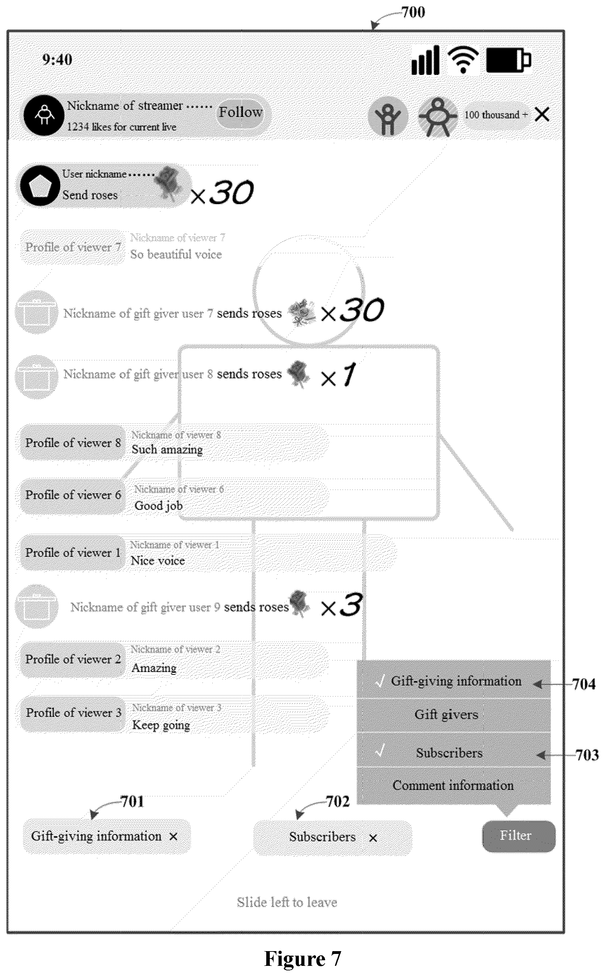

In fact, in some cases, the streamer may want to view multiple types of interaction information. In order to meet the information viewing demand of the streamer, a possible implementation of S4 is further provided according to an embodiment of the present disclosure. In this implementation, in the case that the filter condition input interface includes the at least one piece of candidate condition description information, S4 may further include: displaying, on the interaction information display page, the third interaction information satisfying the information filter condition in the at least one piece of second interaction information, in response to a selection operation on at least one piece of target condition description information (for example, the two pieces of condition description information of "gift-giving information" and "subscribers" as shown in Figure 7) in the at least one piece of candidate condition description information; and displaying a condition display control corresponding to the at least one piece of target condition description information. The information filter condition is determined according to the at least one piece of target condition description information, and the display content on the condition display control corresponding to the target condition description information is determined according to the target condition description information.

For the streamer client used by the streamer in the live stream room, the filter condition input interface is displayed on the streamer client, and at least one piece of candidate condition description information is displayed on the filter condition input interface. The streamer sequentially selects multiple pieces of target condition description information (for example, the two pieces of condition description information of "gift-giving information" and "subscribers" shown in Figure 7) from the at least one piece of candidate condition description information. In this case, after receiving a selection operation on the multiple pieces of target condition description information, the streamer client displays, on the interaction information display page (for example, the page 700 as shown in Figure 7), third interaction information (for example, the interaction information as shown in Figure 7) satisfying a filter condition indicated by one or more pieces of target condition description information in the at least one piece of second interaction information, and condition display controls (for example, the controls 701 and 702 as shown in Figure 7) corresponding to the multiple pieces of target condition description information.

Based on the above two paragraphs, in order to better improve user experience, a possible implementation of the above S4 is further provided according to an embodiment of the present disclosure. In this implementation, in the case that the above filter condition input interface includes at least one piece of candidate condition description information, S4 may further include: displaying, on the interaction information display page, the third interaction information satisfying the information filter condition from the at least one piece of second interaction information, in response to a selection operation on at least one piece of target condition description information (for example, the two pieces of condition description information of "gift-giving information" and "subscribers" shown in Figure 7) in the at least one piece of candidate condition description information; and displaying a condition display control corresponding to the target condition description information on the interaction information display page, and displaying the at least one piece of target condition description information on the filter condition input interface in a preset marking manner. The information filter condition is determined according to the target condition description information.

That is, for the streamer client used by the streamer in the live stream room, when the filter condition input interface is displayed on the streamer client and at least one piece of candidate condition description information is displayed on the filter condition input interface. The streamer sequentially selects, from the at least one piece of candidate condition description information, multiple pieces of target condition description information (for example, the two pieces of condition description information of "gift-giving information" and "subscribers" shown in Figure 7). In this case, after receiving a selection operation on the multiple pieces of target condition description information, the streamer client displays, on the interaction information display page (for example, the page 700 as shown in Figure 7), third interaction information (for example, the interaction information as shown in Figure 7) satisfying a filter condition indicated by one or more pieces of target condition description information in the at least one piece of second interaction information, and condition display controls (for example, the controls 701 and 702 as shown in Figure 7) corresponding to the respective pieces of target condition description information; and displays the multiple pieces of target condition description information on the filter condition input interface in a preset marking manner (for example, the marking manner in regions 704 and 705 as shown in Figure 7).

In addition, the "information filter condition" in the above four paragraphs is not limited in the embodiment of the present disclosure. For ease of understanding, a possible implementation of a determination process of the above "third interaction information satisfying the information filter condition" is described below.

In a possible implementation, when the information filter condition is determined based on the at least one piece of target condition description information, the determination process of the above "third interaction information satisfying the information filter condition" may include the following steps 31 to 33.

In step 31, the n-th condition is determined according to the n-th piece of target condition description information, where n is a positive integer, and n≤N.

The n-th condition refers to a filter condition indicated by the n-th piece of target condition description information.

In addition, an implementation of step 31 is not limited in the embodiments of the present disclosure, which, for example, may include: searching for a filter condition corresponding to the n-th piece of target condition description information from a pre-established mapping relationship; and determining the filter condition as the n-th condition. It should be noted that reference may be made to the foregoing description for relevant content of the "mapping relationship".

In step 32, filtering processing is performed on the at least one piece of second interaction information according to the n-th condition, to obtain second interaction information satisfying the n-th condition, where n is a positive integer, and n≤N.

In step 33, the second interaction information satisfying the n-th condition is determined as the third interaction information, where n is a positive integer, and n≤N.

Based on the relevant descriptions of the above steps 31 to 33, in the case that the "target condition description information" includes at least one piece of target condition description information, the filter conditions corresponding to respective pieces of target condition description information can be determined first, then interaction information that satisfies the filter conditions corresponding to respective pieces of target condition description information can be filtered out from the "at least one piece of second interaction information, and finally, interaction information that satisfies the filter conditions corresponding to all pieces of the target condition description information is determined as the third interaction information.

It can be seen that, in a possible implementation, the above "information filter condition" may include a filter condition indicated by the at least one piece of target condition description information; and satisfying the information filter condition refers to satisfying a filter condition indicated by one of the at least one piece of target condition description information.

In addition, a process of determining display positions of the above "condition display controls corresponding to respective pieces of target condition description information" on the interaction information display page is not limited in the embodiment of the present disclosure, which, for example, may include: determining the display positions of the condition display controls corresponding to the respective pieces of target condition description information on the interaction information display page, according to a selection sequence of the respective pieces of target condition description information. The display positions of the condition display controls on the interaction information display page can indicate the selection sequence of the respective pieces of target condition description information.

In addition, an implementation of the above step of "determining the display positions of the condition display controls corresponding to the respective pieces of target condition description information on the interaction information display page, according to a selection sequence of the respective pieces of target condition description information" is not limited in the embodiments of the present disclosure. For example, the implementation may include: sequentially displaying the condition display controls corresponding to the respective pieces of target condition description information on the interaction information display page, according to the selection sequence of the respective pieces of target condition description information. It can be ensured that the condition display controls can be displayed on the same horizontal line, and that the condition display controls can be arranged on the horizontal line from left to right according to the selection sequence of the respective pieces of target condition description information.

In fact, due to a limited page width of the interaction information display page, in some cases (in the case of a large number of condition display controls), a problem of insufficient page display space may arise. In order to solve this problem, a possible implementation of the above step "displaying the condition display controls corresponding to the respective pieces of target condition description information on the interaction information display page" is provided according to an embodiment of the present disclosure, which may include: displaying, in a first region of the interaction information display page, a to-be-displayed control satisfying a first display condition in the condition display controls corresponding to the respective pieces of target condition description information, so as to display a part of control and hide the other control in the condition display controls corresponding to the respective pieces of target condition description information.

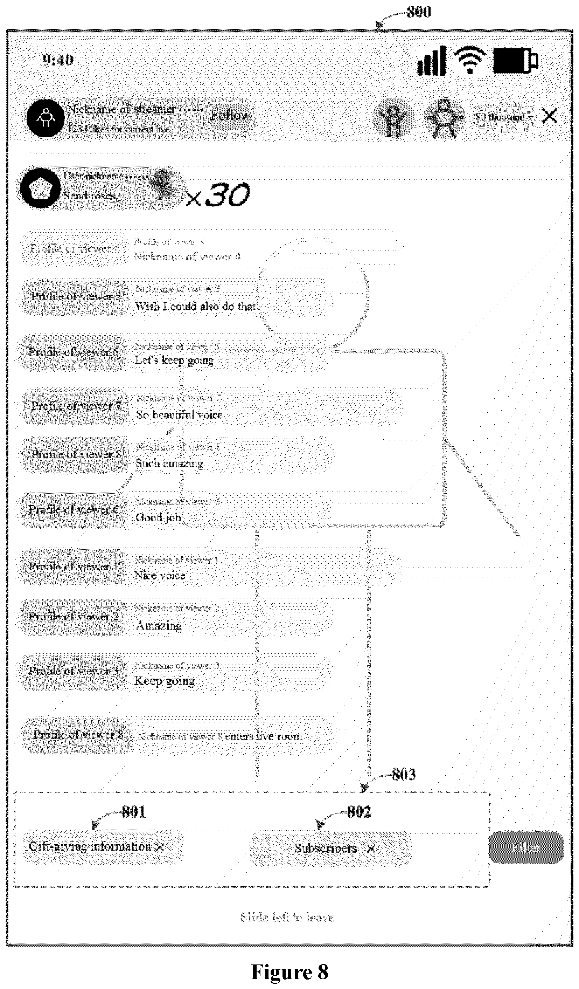

The first region refers to a region for displaying the condition display control corresponding to at least one piece of target condition description information on the interaction information display page. The first region is not limited in the embodiment of the present disclosure, which, for example, may be the region 803 as shown in Figure 8.

In addition, a position of the first region on the interaction information display page is not limited in the embodiment of the present disclosure. For example, the position of the first region on the interaction information display page and the position of the above information filter control on the interaction information display page are on the same horizontal line, and the position of the first region on the interaction information display page is adjacent to the that of the information filter control on the interaction information display page.

The first display condition refers to a condition satisfied by a control directly displayed on the interaction information display page after the selection operation is triggered on the at least one piece of target condition description information. The first display condition may be set in advance, which, for example, may be: selecting condition display controls corresponding to the first Q pieces of target condition description information, where Q is a positive integer (for example, Q=2).

The to-be-displayed control refers to a condition display control in a display state on the interaction information display page. For example, when the streamer sequentially selects three pieces of condition description information of "gift-giving information", "subscribers", and "comment information" from the four pieces of condition description information of "gift-giving information", "gift givers", "subscribers", and "comment information" as shown in Figure 5, it can be determined that the first two selected control. i.e., a condition display control (for example, the control 801 as shown in Figure 8) for displaying the information "gift-giving information" and a condition display control (for example, the control 802 as shown in Figure 8) for displaying the information "subscribers" satisfy the above first display condition, if up to two condition display control can be displayed on the interaction information display page. Hence, the condition display control for displaying the information "gift-giving information" and the condition display control for displaying the information "subscribers" are both determined as to-be-displayed controls and are directly displayed on the interaction information display page (for example, the page 800 as shown in Figure 8).

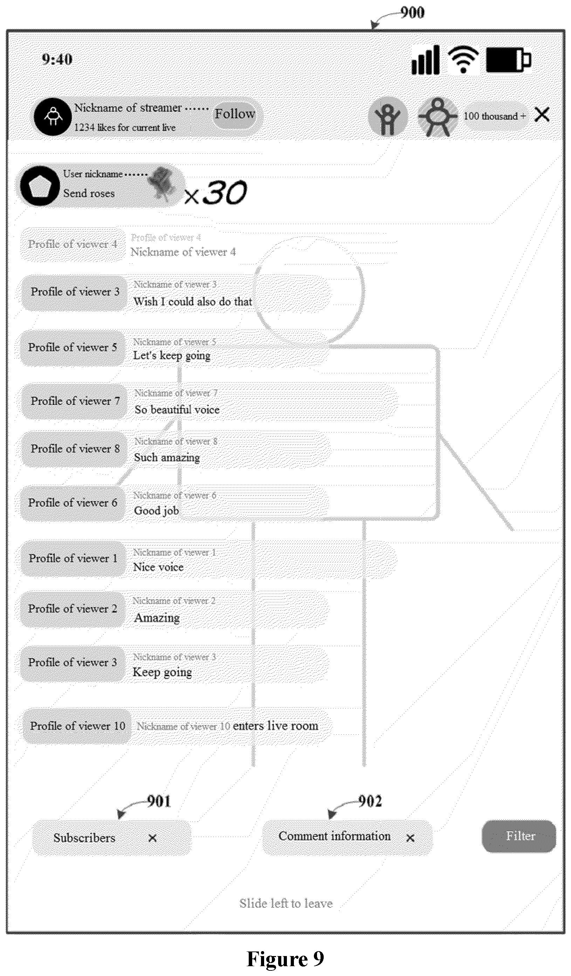

In fact, in order to better improve the information filtering experience of the streamer, the streamer can view a hidden condition display control by performing an operation. Based on this, a possible implementation of displaying the above "condition display control corresponding to the at least one piece of target condition description information" is further provided according to an embodiment of the present disclosure. The possible implementation may include: updating at least one to-be-displayed control in the first region (for example, updating the controls 801 and 802 as shown in Figure 8 to the controls 901 and 902 as shown in Figure 9) in response to a trigger operation on the first region, after displaying the to-be-displayed control in the first region of the interaction information display page.

In addition, the above "trigger operation on the first region" is not limited in the embodiment of the present disclosure, which, for example, may be a press and sliding-to-left operation triggered on the first region.

Based on the relevant descriptions of the display process of "the condition display control corresponding to the at least one piece of target condition description information" above, in some application scenarios (for example, the streamer selects a large amount of pieces of target condition description information), after receiving the selection operation triggered on the at least one piece of target condition description information, the streamer client used by the streamer in the live stream room may simultaneously display, in the first region of the interaction information display page, some controls (for example, the controls 801 and 802 shown in Figure 8) of the condition display controls corresponding to the selected target condition description information. The streamer client can update the controls displayed in the first region after receiving an operation (for example, a pressed left slide operation) triggered on the first region, and the updated controls (for example, the controls 901 and 902 shown in Figure 9 ) displayed in the first region can be different from the controls before the update. In this way, the condition display controls corresponding to all the target condition description information can be displayed on the limited space, thereby effectively improving space usage of the interaction information display page.

In addition, in order to better save page space, a possible implementation of the above S4 is further provided according to an embodiment of the present disclosure. In this implementation, in the case that the above filter condition input interface includes at least one piece of candidate condition description information, S4 may further include: displaying, on the interaction information display page, third interaction information satisfying the information filter condition in the at least one piece of second interaction information, in response to a selection operation on at least one piece of target condition description information in the at least one piece of candidate condition description information; and displaying the condition display control corresponding to the information filter condition, where the information filter condition is determined according to the at least one piece of target condition description information, and display content on the condition display control corresponding to the information filter condition is determined according to the at least one piece of target condition description information.

For the streamer client used by the streamer in the live stream room, the filter condition input interface is displayed on the streamer client, and at least one piece of candidate condition description information is displayed on the filter condition input interface. The streamer sequentially selects, from the at least one piece of candidate condition description information, multiple pieces of target condition description information (for example, the two pieces of condition description information of "gift-giving information" and "subscribers" shown in Figure 7). In this case, after receiving a selection operation on the multiple pieces of target condition description information, the streamer client displays on the interaction information display page (for example, the page 700 as shown in Figure 7), the third interaction information (for example, the interaction information as shown in Figure 7) satisfying the filter conditions indicated by the multiple pieces of target condition description information from the at least one piece of second interaction information; and one condition display control. The display content on the condition display control is determined according to the multiple pieces of target condition description information. In this way, related content of a compound condition with one control can be displayed, thereby being beneficial to saving page space.

Based on the relevant descriptions of steps S1 to S4 above, for a streamer client used by a streamer, a live stream page is display on the streamer client, and at least one piece of first interaction information (for example, comment information and gift-giving information posted in real time) is displayed on the live stream page. In this case, an interaction information display page is displayed on the streamer client after the streamer client receives a trigger operation on the live stream page. The interaction information display page is used to display at least one piece of second interaction information (for example, all posted comment information and gift-giving information). The streamer client displays a filter condition input interface after receiving a trigger operation on an information filter control on the interaction information display page; and displays, on the interaction information display page, third interaction information satisfying an information filter condition in the second interaction information upon receiving a condition input operation triggered on the filter condition input interface. As the information filter condition is determined according to the condition input operation, the third interaction information obtained by filtering with the information filter condition can satisfy an interaction information filtering demand of the streamer, thereby facilitating improving information viewing experience of the streamer.

In addition, because the filter condition input interface is displayed or is not displayed in response to the trigger operation on the information filter control, the filter condition input interface can be displayed in response to a user demand, such that the filter condition input interface will not always occupy space resources of the interaction information display page. In this way, blocking of the interaction information display page by the filter condition input interface can be effectively reduced, thereby effectively improving the information viewing experience of the streamer for the interaction information display page.

Moreover, as the information filter condition is determined according to the condition input operation triggered by the streamer on the filter condition input interface, the information filter condition may be a simple condition or a compound condition. Thus, the information filter condition can better fulfil the interaction information filtering demand of the streamer, thereby facilitating improving the information viewing experience of the streamer.

In fact, in some application scenarios, the above "at least one piece of second interaction information" may include a large amount of pieces of interaction information (for example, gift-giving information or comment information). In order to better improve the information display effect, a possible implementation of the above "interaction information display page" is further provided according to an embodiment of the present disclosure. In this implementation, the interaction information display page includes a first interaction display region. If an information co-occurrence parameter of the first interaction display region satisfies a preset parameter condition, all fourth interaction information satisfying a preset display condition in the at least one piece of second interaction information may be displayed in the first interaction display region in an information update display manner. The information co-occurrence parameter is used to indicate the number of pieces of interaction information capable to be displayed on the first interaction display region simultaneously.

The preset parameter condition may be set in advance. For example, the preset parameter condition may be that the number of information pieces indicated by the information co-occurrence parameter is less than the number of information pieces of the above "all fourth interaction information satisfying a preset display condition in the at least one piece of second interaction information".

The above "information update display manner" may be set in advance, which, for example, may be a page scrolling manner (that is, viewing hidden fourth interaction information by a scrolling operation).

The above "preset display condition" may be set in advance, which is not limited in the embodiments of the present disclosure. For example, the preset display condition may be a condition met by all the comment information posted in the live stream room, or by posted gift-giving information failing to satisfy the preset gift condition in the live stream room.

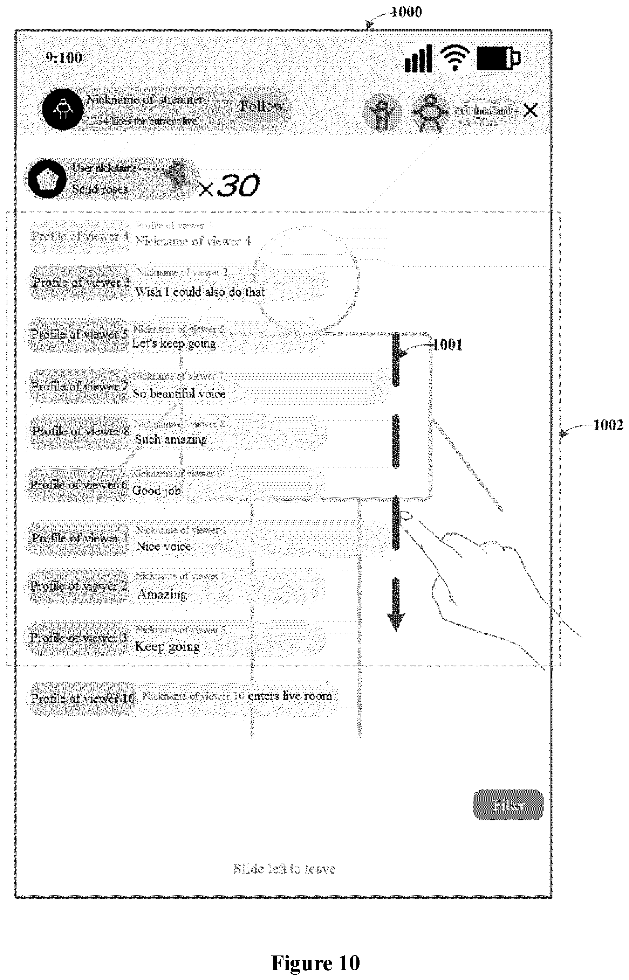

The above "fourth interaction information" is used to indicate second interaction information (for example, information in a region 1002 as shown in Figure 10) that satisfies the preset display condition. The fourth interaction information can be displayed in the first interaction display region.

In addition, the above "all fourth interaction information satisfying the preset display condition" is not limited in the embodiments of the present disclosure, which, for example, may include all the comment information posted for the live stream room, and the posted gift-giving information (for example, all gift-giving information involving gifts of other gift types than a preset gift type, or all gift-giving information involving gifts of the preset gift type but having a posted duration greater than a preset duration threshold) failing to satisfy the preset gift condition in the live stream room.

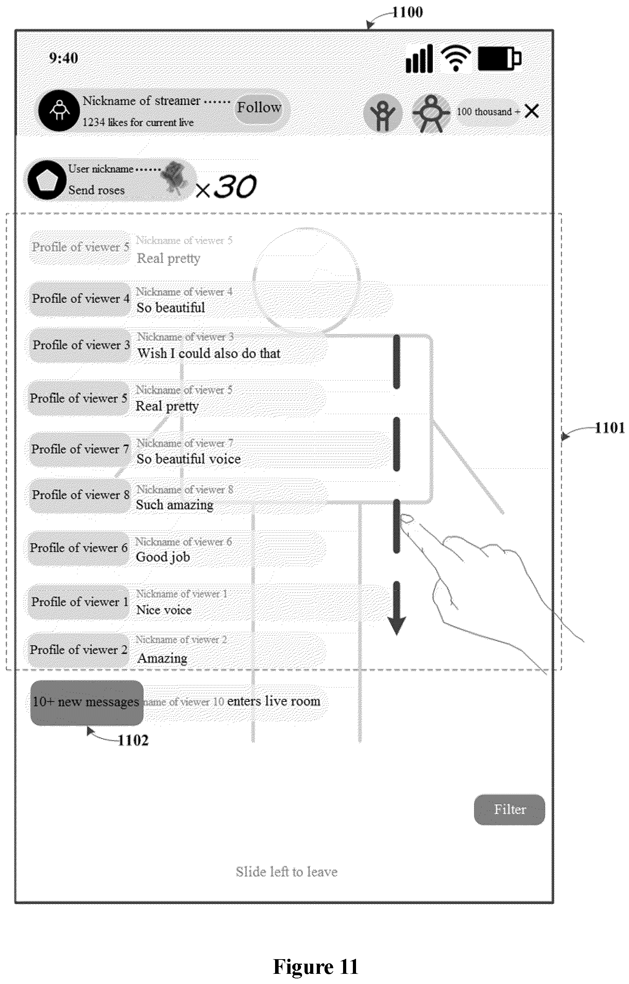

Based on the relevant description of the above "first interaction display region", for the first interaction display region above, only a limited amount of pieces of interaction information can be displayed on the first interaction display region at the same time (for example, 9 pieces of interaction information in region 1002 as shown in Figure 10). In order to display all the fourth interaction information in the first interaction display region, after an operation (for example, a sliding operation in a direction indicated by dotted line 1001 as shown in Figure 10) is triggered on the first interaction display region, the interaction information displayed in the first interaction display region changes accordingly with the operation (for example, from the 9 pieces of interaction information in region 1002 as shown in Figure 10 to the 9 pieces of interaction information in region 1101 as shown in Figure 11). In this way, all the fourth interaction information can be displayed in the first interaction display region in the information update display manner.

It should be noted that, for the region 1002 in Figure 10, among all the interaction information simultaneously displayed in the region 1002, the interaction information closer to a bottom boundary of the region 1002 has a later post time, and the interaction information closer to a top boundary of the region 1002 has an earlier post time.

Based on the above relevant description of the "first interaction display region", in the case that the interaction information display page includes the first interaction display region, and the information co-occurrence parameter of the first interaction display region satisfies the preset parameter condition, a possible implementation of the method for displaying information is further provided according to an embodiment of the present disclosure. In this implementation, the method for displaying information may include the following step 11 in addition to the above S1 and S2. The step 11 is performed after the step S2.

In step 11, interaction information displayed in the first interaction display region is updated, in response to an information update operation triggered on the first interaction display region in the interaction information display page.

The above "information update operation triggered on the first interaction display region" is used to trigger an update process for the interaction information displayed in the first interaction display region. The "information update operation triggered on the first interaction display region" is not limited in the embodiment of the present disclosure, which, for example, may be a sliding operation in a direction indicated by the dotted line 1001 in Figure10.

An implementation of the step "updating interaction information displayed in the first interaction display region" in above step 11 is not limited in the embodiments of the present disclosure, which, for example, may be implemented in a preset information update rule (for example, hiding R pieces of interaction information posted relatively late, and displaying R pieces of interaction information posted relatively early).

Based on the relevant description of above step 11, for the streamer client used by the streamer in the live stream room, the interaction information display page is displayed on the streamer client, and the interaction information display page includes the first interaction display region. In this case, it can be determined that the first interaction display region is incapable of displaying all the fourth interaction information at the same time if the information co-occurrence parameter of the first interaction display region is determined to satisfy the preset parameter condition. In this case, the streamer client can determine some latest posted interaction information in the fourth interaction information as initial display content of the interaction information display page, and the streamer can subsequently view other information in the fourth interaction information by the information update operation triggered on the first interaction display region. In this way, all the fourth interaction information can be displayed with the first interaction display region.

In fact, in order to better improve the information viewing experience of the streamer, an information display layout of the interaction information display page may be similar to an information display layout of the live stream page. Based on this, a possible implementation of the above "interaction information display page" is further provided according to an embodiment of the present disclosure. In this implementation, besides the first interaction display region, the interaction information display page further includes a second interaction display region (for example, region 401 as shown in Figure 4) and/or a third interaction display region (for example, region 403 as shown in Figure 4). The second interaction display region is used to display the gift-giving interaction information that satisfies the preset gift condition (for example, recently posted gift-giving information for sending some kind of flying wheat gift) in the "at least one piece of second interaction information". The third interaction display region is used to display the live streaming interaction information that satisfies the preset interaction condition (for example, prompt information for prompting that a certain user has entered the live stream room) in the "at least one piece of second interaction information". It should be noted that reference may be made to the foregoing descriptions for the relevant descriptions of the preset gift condition and the preset interaction condition.

For the streamer client used by the streamer in the live stream room, when the interaction information display page is displayed on the streamer client, the interaction information display page may display, in the first interaction display region, all interaction information that is posted by a viewer of the live stream room in the live stream room and satisfies the preset display condition (for example, the interaction information displayed in region 402 in Figure 4). In addition, some interaction information satisfying a certain condition (for example, one or more pieces of gift-giving interaction information satisfying the preset gift condition or live streaming interaction information satisfying the preset interaction condition) is displayed in a highlighted manner. In this way, a viewer of the interaction information display page can not only know the interaction information posted by the viewer of the live stream room, but also focus on the interaction information satisfying the certain condition (for example, recently posted gift-giving information for sending some kind of flying wheat gift, or prompt information for prompting that a certain user has entered the live stream room), thereby facilitating improving the information viewing experience of the streamer.

In fact, when viewing some interaction information posted relatively early in the first interaction display region, the streamer may want to go back to view some interaction information posted relatively late (for example, view some new interaction information posted while the streamer browses historical interaction information).

In order to better satisfy the above information viewing demand, a possible implementation of the above method for display information is further provided according to an embodiment of the present disclosure. In this implementation, in the case that the interaction information display page includes the first interaction display region and the first interaction display region is used to display all the fourth interaction information in the information update display manner, the method for display information may further include the following steps 12 and 13 in addition to the above S1, S2 and step 11. The step 12 is performed after step 11.

In step 12, an information prompt object is displayed on the interaction information display page, after fifth interaction information satisfying a preset information condition is received.

The preset information condition refers to a condition met by new interaction information posted for the live stream room by a viewer of the live stream room while the streamer browses some interaction information posted relatively early in the first interaction display region.

The above "fifth interaction information" refers to new interaction information posted for the live stream room by the viewer of the live stream room while the streamer browses some interaction information posted relatively early in the first interaction display region.

The information prompt object is used to prompt that the streamer client used by the streamer has received at least one piece of fifth interaction information while the streamer browses interaction information posted relatively early in the first interaction display region, such that the streamer can know from the information prompt object that some new interaction information is posted while the streamer browses historical interaction information.

In addition, an implementation of the information prompt object is not limited in the embodiments of the present disclosure. For example, the information prompt object may be implemented through the control 1102 in Figure 11. In another example, the information prompt object may be implemented through a floating box.

Besides, a display position of the information prompt object on the interaction information display page is not limited in the embodiments of the present disclosure, which, for example, may be a position set in advance.

In fact, in order to more effectively improve the space utilization of the above interaction information display page, a possible implementation of the display position of the information prompt object on the interaction information display page is provided according to an embodiment of the present disclosure. In this implementation, in the case that the above-mentioned third interaction display region (for example, the region 403 in Figure 4) is displayed on the interaction information display page, the display information prompt object may be displayed in the third interaction display region. Thus, the information prompt object can be displayed without increasing the space consumption of the interaction information display page. It should be noted that reference may be made to the foregoing description for the relevant content of the third interaction display region.

Based on the relevant description in step 12 above, for the streamer client used by the streamer in the live stream room, the interaction information display page is displayed in the streamer client, and the interaction information display page includes the first interaction display region. In this case, if the streamer is browsing interaction information posted relatively early in the first interaction display region, after the streamer client receives at least one piece of fifth interaction information satisfying the preset information condition, it can be determined that a viewer of the live stream room posts some new interaction information for the live stream room while the streamer browses interaction information. Thus, the streamer client can display the information prompt object on the interaction information page. In this way, the information prompt object can prompt the streamer that some new interaction information is posted in the live stream room, such that the streamer can know this situation and view the newly posted interaction information in time by some operations (for example, sliding multiple times in a direction opposite to the direction indicated by the dotted line 1001 as shown in Figure 10, or an operation in the following step 13)

In step 13, the interaction information displayed in the first interaction display region is updated with the fifth interaction information, in response to a trigger operation on the information prompt object.

In an embodiment of the present disclosure, for the streamer client used by the streamer in the live stream room, the interaction information display page is displayed in the streamer client, the interaction information display page includes the first interaction display region, and the information prompt object is displayed on the interaction information display page. In this case, the streamer client may update the interaction information displayed in the first interaction display region with the fifth interaction information upon receiving a trigger operation (for example, a click operation) on the information prompt object. Thus, the updated interaction information displayed in the first interaction display region includes some pieces or all pieces of the fifth interaction information. In this way, some pieces or all pieces of the fifth interaction information can be displayed in the first interaction display region at the same time, such that the streamer can quickly view the fifth interaction information in the first interaction display region, thereby facilitating improving the information viewing experience of the streamer.

It should be noted that an implementation of the above step "the interaction information displayed in the first interaction display region is updated with the fifth interaction information" is not limited in the embodiments of the present disclosure, which, for example, may be implemented by any method for updating a message display region with new messages in the related technology or the future technology. In another example, in the case the number of pieces of fifth interaction information is equal to the number of pieces of interaction information simultaneously displayed in the first interaction display region, each piece of fifth interaction information may be determined as the updated interaction information displayed in the first interaction display region. In another example, in the case that the number of pieces of fifth interaction information is less than the number of pieces of interaction information simultaneously displayed in the first interaction display region, each piece of fifth interaction information may be determined as the updated interaction information displayed in the first interaction display region, and some pieces of fourth interaction information posted relatively late is also determined as the updated interaction information displayed in the first interaction display region. Thus, the updated interaction information displayed in the first interaction display region has an earlier post time than all hidden interaction information. In another example, in the case that the number of pieces of fifth interaction information is greater than the number of pieces of interaction information simultaneously displayed in the first interaction display region, some pieces of fifth interaction information posted relatively late may be determined as the updated interaction information displayed in the first interaction display region, such that the updated interaction information displayed in the first interaction display region has an earlier post time than all the hidden interaction information.

In fact, the streamer sometimes wants to remove a certain selected filter condition (for example, the filter condition represented by region 605 in Figure 6). In order to meet this demand, another possible implementation of the method for displaying information is further provided according to an embodiment of the present disclosure. In this implementation, in the case that the method for displaying information includes at least the above S3 and S4, the method for displaying information may further include the following step 213.

In step 213, the at least one piece of second interaction information is displayed on the interaction information display page, in response to a removing operation triggered on the target condition description information.

The above "removing operation triggered on the target condition description information" is used to remove the filter condition represented by the target condition description information.

In addition, an implementation of the above "removing operation triggered on the target condition description information" is not limited in the embodiments of the present disclosure. For example, in the case that the filter condition input interface (for example, the interface 601 as shown in Figure 6) is displayed in the streamer client and the target condition description information is displayed on the filter condition input interface in the preset marking manner, the "removing operation triggered on the target condition description information" may be a de-selection operation (for example, a click operation or other operations) triggered on a region (for example, the region 605 as shown in Figure 5) occupied by the target condition description information on the filter condition input interface.

In another example, in the case that the interaction information display page (for example, the page 600 as shown in Figure 6) is displayed on the streamer client and a condition display control (for example, the control 602 as shown in Figure 6) corresponding to the target condition description information is displayed on the interaction information display page, the "removing operation triggered on the target condition description information" may be a trigger operation (for example, a click operation) on a turn-off control deployed on the condition display control corresponding to the target condition description information.

In combination with the description in the above paragraph, in order to better improve the information filtering experience of the streamer, another possible implementation of step 213 is further provided according to an embodiment of the present disclosure. In this implementation, in the case that the condition display control corresponding to the target condition description information is displayed on the interaction information display page, the step 213 may further include: displaying the at least one piece of second interaction information, in response to the removing operation triggered on the target condition description information, and removing display of the condition display control corresponding to the target condition description information, to restore to the interaction information (for example, the interaction information as shown in Figure 5) displayed on the interaction information display page before the filtering processing according to the filter condition indicated by the target condition description information.

Based on the relevant description of step 213 above, for the streamer client used by the streamer in the live stream room, the interaction information display page (for example, the page 600 as shown in Figure 6) is displayed on the streamer client, and interaction information that satisfies the filter condition indicated by the target condition description information is displayed on the interaction information display page. In this case, after the streamer client receives the removing operation (for example, a click operation on the region 605 in Figure 6, or a click operation on the control 603 in Figure 6) triggered on the target condition description information, it can be determined that the streamer has removed the filtering processing on the at least one piece of second interaction information according to the filter condition indicated by the target condition description information. Thus, the streamer client can directly update the interaction information display page with the at least one piece of second interaction information, such that the updated interaction information display page (for example, the page 500 as shown in Figure 5) is used to display the at least one piece of second interaction information again, which is beneficial to improving selection flexibility of filter conditions and thereby facilitates better fulling the information filtering experience of the streamer.

In fact, in order to better improve the information filtering experience of the streamer, another possible implementation of the method for displaying information is further provided according to an embodiment of the present disclosure. In this implementation, in the case that the method for displaying information includes at least the step S3 above, the method for displaying information further includes step 214. The step 214 is performed later than S3.

In step 214, the display of the filter condition input interface is removed, in response to a trigger operation on a third region of the interaction information display page, in the case that the filter condition input interface is displayed in a second region of the interaction information display page, where there is no overlapping region between the third region and the second region
The second region refers to a region used to display the filter condition input interface on the interaction information display page, which is not limited in the embodiment of the present disclosure. For example, the second region may be a region occupied by the interface 502 on the page 500 in Figure 5.

The third region refers to a region other than the second region on the interaction information display page. Thus, there is no overlapping region between the third region and the second region.

In addition, the third region is not limited in the embodiments of the present disclosure. For example, in the case that the interaction information display page is the page 500 shown in Figure 5 and the second region is a region occupied by the interface 502 on the page 500 in Figure 5, the third region may be the other region on the page 500 rather than the region occupied by the interface 502 on the page 500.

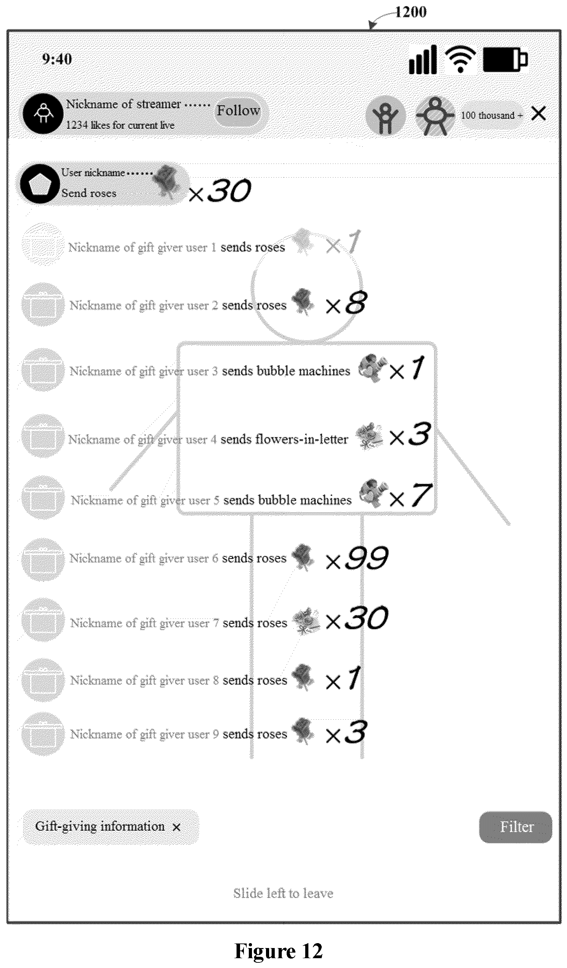

Based on the relevant description of the step 214, for the streamer client used by the streamer in the live stream room, the interaction information display page (for example, the page 600 as shown in Figure 6) is displayed on the streamer client, the second region is a region occupied by the interface 601 on the interaction information display page in Figure 6, and the third region is the other region on the interaction information display page rather than the second region. After receiving the trigger operation (for example, a click operation) on the third region of the interaction information display page, the streamer client removes display of the filter condition input interface, to obtain the interaction information display page 1200 as shown in Figure 12. In this way, adverse effects (for example, some information is blocked) caused by the filter condition input interface in a display state can be effectively avoided, thereby facilitating improving the information viewing experience of the streamer.

In fact, in order to better improve the information filtering experience of the streamer, another possible implementation of the method for displaying information is further provided according to an embodiment of the present disclosure. In this implementation, in the case that the method for displaying information includes at least the step S3 above, the method for displaying information further includes step 215. The step 215 is performed later than the S3.

In step 215, display of the filter condition input interface is removed, in response to a trigger operation on the information filter control on the interaction information display page.

That is, for the streamer client used by the streamer in the live stream room, when the interaction information display page (for example, the page 600 as shown in Figure 6) is displayed on the streamer client and the filter condition input interface is displayed on the interaction information display page, the streamer may remove the display of the filter condition input interface in response to the trigger operation (for example, a click operation) on the information filter control on the interaction information display page, to obtain the interaction information display page 1200 as shown in Figure 12. In this way, adverse effects (for example, some information is blocked) caused by the filter condition input interface in a display state can be effectively avoided, thereby facilitating improving the information viewing experience of the streamer.

In fact, in some cases, when entering the interaction information display page again, the streamer may want to continue to view the interaction information corresponding to a filter condition selected last time. In order to better improve the information filtering experience of the streamer, a possible implementation of the method for displaying information is further provided according to an embodiment of the present disclosure. In this implementation, in the case that the method for displaying information includes at least the above S3 and S4, the method for displaying information may further include the following steps 22 and 23. The step 22 is performed later than step S4.

In step 22, the live stream page is displayed, in response to a page exit operation triggered on the interaction information display page.

The page exit operation is used to trigger a turn-off process of the interaction information display page. The page exit operation may be set in advance, which, for example, may be implemented by any method for removing the display of a certain page in the related technology or the future technology (for example, click a turn-off button × on the page, or click an exit button on the page).

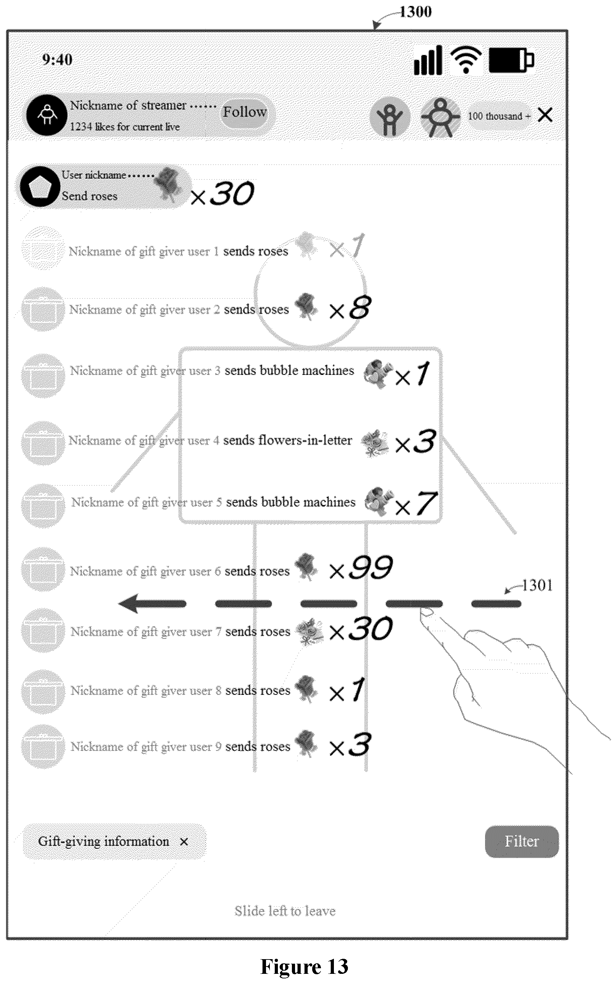

In fact, because the interaction information display page has a limited space, in order to avoid burdening the space usage of the interaction information display page, the above "page exit operation" may be implemented by a gesture (for example, a sliding-to-right gesture indicated by the dotted line 301 in Figure 1). Based on this, a possible implementation of the "page exit operation" is further provided according to an embodiment of the present disclosure, which may be a sliding operation in a second direction on the interaction information display page. The second direction may be set in advance, which, for example, may be a direction indicated by the dotted line 1301 as shown in Figure 13.

In addition, in order to better improve the information filtering experience of the streamer, a possible implementation of the above interaction information display page is further provided according to an embodiment of the present disclosure. In this implementation, prompt information (for example, the string 503 "slide left to leave" as shown in Figure 5) for the page exit operation is further displayed on the interaction information display page. The prompt information can prompt the streamer that the streamer can leave the interaction information display page by performing the page exit operation.

In addition, an implementation of the step 22 above is not limited in the embodiments of the present disclosure. For example, in the case that the interaction information display page is displayed on the live stream page, step 22 may include: removing display of the interaction information display page on the live stream page, in response to the page exit operation triggered on the interaction information display page.

Based on the relevant description of the above step 22, for the streamer client used by the streamer in the live stream room, when the interaction information display page (for example, the page 1200 as shown in Figure 12) is displayed on the streamer client and the interaction information display page is used to display the third interaction information obtained by filtering, the streamer client leaves the interaction information display page and displays the live stream page, after receiving the page exit operation (for example, a sliding-left operation) triggered on the interaction information display page.

In step 23, the interaction information display page is displayed, in response to a trigger operation on the live stream page, where interaction information satisfying the information filter condition is displayed on the interaction information display page.

In an embodiment of the present disclosure, for the streamer client used by the streamer in the live stream room, after returning from the interaction information display page to the live stream page, the streamer client may display the interaction information display page (for example, the page 1200 as shown in Figure 12) after receiving again the trigger operation (for example a sliding-to-right operation) on the live stream page. Thus, information filtering processing can be performed again according the filter condition used by the interaction information display page last time when leaving the interaction display page, on the interaction information display page; and the interaction information display page can display again the content displayed last time when leaving the interaction information display page. In this way, the streamer can view again the interaction information corresponding to the filter condition selected last time, thereby facilitating better improving the information filtering experience of the streamer.

Based on the relevant descriptions of the steps 22 to 23 above, in some application scenarios, for the streamer client used by the streamer in the live stream room, when leaving the interaction information display page, the streamer client may retain the filter condition used by the interaction information display page. Thus, when the streamer client enters the interaction information display page again, the interaction information display page can continue to display the interaction information that satisfies the filter condition, which can effectively prevent the streamer from repeating the same operation, thereby facilitating improving the information filtering experience of the streamer.

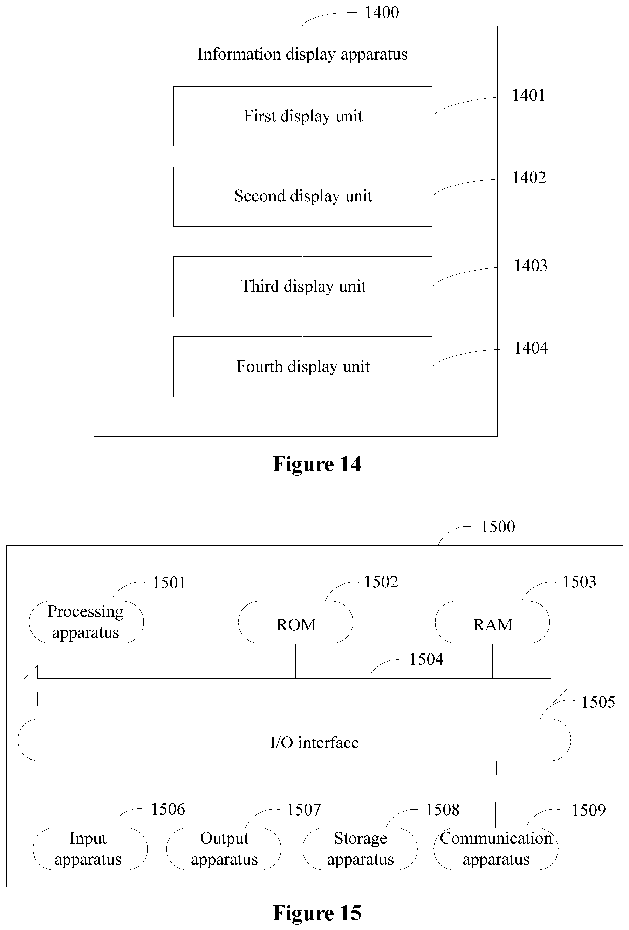

Based on the method for displaying information according to the embodiments of the present disclosure, an apparatus for displaying information is further provided according to an embodiment of the present disclosure, which is explained and described below with reference to Figure 14. Figure 14 is a schematic structural diagram of an apparatus for displaying information according to an embodiment of the present disclosure. It should be noted that, the technical details of the apparatus for displaying information according to the embodiment of the present disclosure may refer to relevant descriptions of the method for displaying information.

As shown in Figure 14, the information display apparatus 1400 according to the embodiment of the present disclosure includes: a first display unit 1401, a second display unit 1402, a third display unit 1403 and a fourth display unit 1404.

The first display unit 1401 is configured to display a live stream page, where at least one piece of first interaction information is displayed on the live stream page.

The second display unit 1402 is configured to display an interaction information display page, in response to a trigger operation on the live stream page, where the interaction information display page is used to display at least one piece of second interaction information, and the at least one piece of second interaction information includes the at least one piece of first interaction information.

The third display unit 1403 is configured to display a filter condition input interface, in response to a trigger operation on an information filter control on the interaction information display page.

The fourth display unit 1404 is configured to display, on the interaction information display page, third interaction information satisfying an information filter condition in the at least one piece of second interaction information, in response to a condition input operation triggered on the filter condition input interface, where the information filter condition is determined according to the condition input operation.

In a possible implementation, the filter condition input interface includes at least one piece of candidate condition description information.

The fourth display unit 1404 is configured to display, on the interaction information display page, the third interaction information satisfying the information filter condition in the at least one piece of second interaction information, in response to a selection operation on target condition description information in the at least one piece of candidate condition description information, where the information filter condition is determined according to the target condition description information.

In a possible implementation, the at least one piece of candidate condition description information includes at least one of first condition description information, second condition description information, third condition description information, and fourth condition description information, where the first condition description information is used to describe a filter condition for searching for gift-giving interaction information in the at least one piece of second interaction information, the second condition description information is used to describe a filter condition for searching for gift-giving description information of at least one gift giver recorded in the at least one piece of second interaction information, the third condition description information is used to describe a filter condition for searching for interaction description information of at least one subscriber recorded in the at least one piece of second interaction information, and the fourth condition description information is used to describe a filter condition for searching for comment interaction information in the at least one piece of second interaction information.

In a possible implementation, the fourth display unit 1404 is configured to display, on the interaction information display page, the third interaction information satisfying the information filter condition in the at least one piece of second interaction information, in response to the condition input operation triggered on the filter condition input interface; and display a condition display control corresponding to the information filter condition, where display content on the condition display control is determined according to the information filter condition.

In a possible implementation, the filter condition input interface includes at least one piece of candidate condition description information.

The fourth presentation unit 1404 is configured to display, on the interaction information display page, the third interaction information satisfying the information filter condition in the at least one piece of second interaction information, in response to a selection operation on at least one piece of target condition description information in the at least one piece of candidate condition description information; and display a condition display control corresponding to the target condition description information, where the information filter condition is determined according to the at least one piece of target condition description information, and display content on the condition display control corresponding to the target condition description information is determined according to the target condition description information; or
the fourth presentation unit 1404 is configured to display, on the interaction information display page, the third interaction information satisfying the information filter condition in the at least one piece of second interaction information, in response to a selection operation on at least one piece of target condition description information in the at least one piece of candidate condition description information; and display the condition display control corresponding to the information filter condition, where the information filter condition is determined according to the at least one piece of target condition description information, and display content on the condition display control corresponding to the information filter condition is determined according to the at least one piece of target condition description information.

In a possible implementation, the information display apparatus 1400 further includes: a fifth display unit.

The fifth display unit is configured to display the at least one piece of second interaction information on the interaction information display page and turn off the condition display control corresponding to the target condition description information, in response to a turn-off operation triggered on the condition display control corresponding to the information filter condition, after displaying the condition display control corresponding to the information filter condition.

In a possible implementation, a turn-off control is displayed on the condition display control.

The fifth display unit is configured to display the at least one piece of second interaction information on the interaction information display page and turn off the condition display control corresponding to the target condition description information, in response to a trigger operation on the turn-off control on the condition display control corresponding to the information filter condition.

In a possible implementation, at least one management control is further displayed on the condition display control, and the management control is used to adjust a display state of the condition display control on the interaction information display page.

In a possible implementation, a display position of the condition display control on the interaction information display page and a display position of the information filter control on the interaction information display page satisfy a preset position relationship.

In a possible implementation, the filter condition input interface includes at least one piece of candidate condition description information.

The information filter condition is determined according to N pieces of target condition description information selected from the at least one piece of candidate condition description information, where N is a positive integer.

A filtering process for the third interaction information includes:
determining an n-th condition according to an n-th piece of target condition description information, where n is a positive integer and n≤N;
filtering the at least one piece of second interaction information according to the n-th condition, to obtain second interaction information satisfying the n-th condition, where n is a positive integer and n≤N, and
determining the second interaction information satisfying the n-th condition, as the third interaction information, where n is a positive integer and n≤N.

In a possible implementation, the third display unit 1403 is configured to display the filter condition input interface in a second region of the interaction information display page.

The information display apparatus 1400 further includes: a first removing unit.

The first removing unit is configured to remove display of the filter condition input interface, in response to a trigger operation on a third region of the interaction information display page, where there is no overlapping region between the third region and the second region.

In a possible implementation, the information display apparatus 1400 further includes: a second removing unit.

The second removing unit is configured to remove display of the filter condition input interface, in response to a trigger operation on the information filter control in the interaction information display page, after displaying the filter condition input interface.

In a possible implementation, the interaction information display page includes a first interaction display region.

The first interaction display region is used to display, in an information update display manner, all fourth interaction information satisfying a preset display condition in the at least one piece of second interaction information, in a case that an information co-occurrence parameter of the first interaction display region satisfies a preset parameter condition.

The information display apparatus 1400 further includes: a first updating unit.

The first updating unit is configured to update interaction information displayed in the first interaction display region, in response to an information update operation triggered on the first interaction display region, after displaying the interaction information display page.

In a possible implementation, the interaction information display page further includes a second interaction display region and/or a third interaction display region, where the second interaction display region is used to display gift-giving interaction information satisfying a preset gift condition in the at least one piece of second interaction information, and the third interaction display region is used to display live streaming interaction information satisfying a preset interaction condition in the at least one piece of second interaction information.

In a possible implementation, the information display apparatus 1400 further includes: a sixth display unit

The sixth display unit is configured to display an information prompt object on the interaction information display page, in response to receiving fifth interaction information satisfying a preset information condition, after updating the interaction information displayed in the first interaction display region.

In a possible implementation, the information display apparatus 1400 further includes: a second updating unit.

The second updating unit is configured to update the interaction information displayed in the first interaction display region with the fifth interaction information, in response to a trigger operation on the information prompt object, after displaying the information prompt object on the interaction information display page.

In a possible implementation, the third interaction display region is further displayed on the interaction information display page, where the third interaction display region is used to display live streaming interaction information satisfying a preset interaction condition in the at least one piece of second interaction information.

The sixth display unit is configured to display the information prompt object in the third interaction display region.

In a possible implementation, the second display unit 1402 is configured to display the interaction information display page on the live stream page in a preset page display manner.

Based on the relevant descriptions of the above apparatus 1400 for displaying the information, for the apparatus 1400 for displaying the information according to the embodiment of the present disclosure, a live stream page is displayed on the apparatus 1400 for displaying the information, and at least one piece of first interaction information (for example, comment information and gift-giving information posted in real time) is displayed on the live stream page. An interaction information display page is displayed on the apparatus 1400 for displaying the information after the apparatus 1400 for displaying the information receives a trigger operation on the live stream page. The interaction information display page is used to display at least one piece of second interaction information (for example, all posted comment information and gift-giving information), such that the information display apparatus 1400 displays a filter condition input interface after receiving a trigger operation on an information filter control on the interaction information display page. Third interaction information satisfying an information filter condition in the second interaction information is displayed on the interaction information display page, upon the apparatus 1400 for displaying the information receives a condition input operation triggered on the filter condition input interface. As the information filter condition is determined according to the condition input operation, the third interaction information obtained by filtering with the information filter condition can satisfy an interaction information filtering demand of the streamer, thereby facilitating improving information viewing experience of the streamer.

In addition, because the filter condition input interface can be displayed or not displayed in response to the trigger operation on the information filter control, the filter condition input interface can be displayed in response to a user demand, such that the filter condition input interface will not always occupy space resources of the interaction information display page. In this way, blocking of the interaction information display page by the filter condition input interface can be effectively reduced, thereby effectively improving the information viewing experience of the interaction information display page for the streamer.

Moreover, as the information filter condition is determined according to the condition input operation triggered by the streamer on the filter condition input interface, the information filter condition may be a simple condition or a compound condition, so that the information filter condition can better fulfil the interaction information filtering demand of the streamer, thereby facilitating improving the information viewing experience of the streamer.

In addition, an electronic device is further provided according to an embodiment of the present disclosure, where the device includes a processor and a memory. The memory is configured to store instructions or computer programs. The processor is configured to execute the instructions or computer programs in the memory, to cause the electronic device to perform the method for display the information according to any of the embodiments of the present disclosure.

Reference is made to Figure 15, which shows a schematic structural diagram of an electronic device 1100 suitable for implementing the embodiments of the present disclosure. A terminal device according to the embodiments of the present disclosure may include, but not limited to, a mobile terminal such as a mobile phone, a notebook computer, a digital broadcast receiver, a PDA (personal digital assistant), a PAD (tablet computers), a PMP (portable multimedia player), a vehicle-mounted terminal (such as car navigation terminals) and a fixed terminal such as a digital TVs, or a desktop computer. The electronic device shown in Figure 15 is only an example, and does not limit the functions and application scope of the embodiments of the present disclosure.

As shown in Figure 15, the electronic device 1100 may include a processing apparatus (such as a central processing unit, or a graphics processing unit) 1501 that can perform various actions and processing according to a program stored in a read-only memory (ROM) 1502 or a program loaded from a storage apparatus 1508 to a random-access memory (RAM) 1503. Various programs and data for the operation of the electronic device 1100 are also stored in the RAM 1503. The processing apparatus 1501, ROM 1502, and RAM 1503 are connected to each other through a bus 1504. An input/output (I/O) interface 1505 is also connected to bus 1504.

Typically, the following apparatus may be connected to the I/O interface 1505: an input apparatus 1506 including, for example, a touch screen, touchpad, keyboard, mouse, camera, microphone, accelerometer or gyroscope; an output apparatus 1507 including, for example, a liquid crystal display (LCD), speaker or a vibrator; the storage apparatus 1508 including, for example, a magnetic tape or a hard disk; and a communication apparatus 1509. The communication apparatus 1509 may allow the electronic device 1100 to perform wireless or wired communication with other devices to exchange data. While Figure 15 shows an electronic device 1100 having various apparatus, it is to be understood that the electronic device is not limited to be implemented by the illustrated apparatuses or provided with the illustrated apparatuses. Alternatively, the electronic device may be implemented by or provided with more or less apparatuses alternatively.

In particular, according to an embodiment of the present disclosure, the processes described above with reference to the flowcharts can be implemented as computer software programs. For example, a computer program product, which includes a computer program carried on a non-transitory computer readable medium, is provided according to an embodiment of the present disclosure. The computer program includes program codes for executing the method shown in the flowcharts. In such an embodiment, the computer program may be downloaded and installed from a network via the communication apparatus 1509, or from the storage apparatus 1508, or from the ROM 1502. When the computer program is executed by the processing apparatus 1501, the above-mentioned functions defined in the methods of the embodiments of the present disclosure are performed.

The electronic device according to the embodiment of the present disclosure belongs to the same inventive concept as the method according to the above embodiments, the technical details not described in detail in this embodiment can be referred to the above embodiments, and this embodiment has the same beneficial effect as the above embodiments.

A computer-readable medium with instructions or computer programs stored thereon is further provided according to an embodiment of the present disclosure, where the instructions or computer programs, when running on a device, cause the device to perform the method for displaying the information according to any of the embodiments of the present disclosure.

It should be noted that the above-mentioned computer-readable medium in the present disclosure may be a computer-readable signal medium or a computer-readable storage medium or any combination of the above two. A computer-readable storage medium may be, for example, but not limited to, an electrical, magnetic, optical, electromagnetic, infrared, or semiconductor system, apparatus, or device, or any combination thereof. More specific examples of the computer-readable storage medium may include, but not limited to, an electrical connection with one or more wires, portable computer diskette, hard disk, random access memory (RAM), read-only memory (ROM), erasable programmable read-only memory (EPROM or flash memory), optical fiber, portable compact disk read-only memory (CD-ROM), optical storage device, magnetic storage device, or any suitable combination of the above. In the present disclosure, the computer-readable storage medium may be any tangible medium that contains or stores a program that can be used by or in conjunction with an instruction execution system, apparatus, or device. In the present disclosure, a computer-readable signal medium may include a data signal propagated in baseband or as part of a carrier wave carrying computer-readable program code therein. Such propagated data signals may be in many forms, including but not limited to electromagnetic signals, optical signals, or any suitable combination of the foregoing. A computer-readable signal medium may also be any computer-readable medium other than a computer-readable storage medium, which can send, propagate, or transmit a program for use by or in conjunction with an instruction execution system, apparatus, or device. Program code on a computer-readable medium may be transmitted by any appropriate medium, including but not limited to: wires, optical cables, RF (radio frequency), or any suitable combination of the above.

In some implementations, a client and a server can communicate using any currently-known or future-developed network protocols such as HTTP (Hyper Text Transfer Protocol), and can interconnect with any form or medium of digital data communication (for example, a communication network). Examples of the communication network include a local area network (LANs), a wide area network (WANs), internetwork (for example, the Internet), and a peer-to-peer network (for example, an ad hoc peer-to-peer network), as well as any currently-known or future-developed network.

The above-mentioned computer-readable medium may be included in the above-mentioned electronic device, or may exist independently without being incorporated into the electronic device.

The above-mentioned computer-readable medium carries one or more programs, when executed by the electronic device, the one or more programs cause the electronic device to perform the above-described method.

Computer program codes for carrying out operations of the present disclosure may be written in one or more programming languages, or combinations thereof, including, but not limited to, object-oriented programming languages, such as Java, Smalltalk and C++, and conventional procedural programming languages, such as the "C" language or similar programming languages. The program code may be executed entirely on the user's computer, partly on the user's computer, as a stand-alone software package, partly on the user's computer and partly on a remote computer, or entirely on the remote computer or server. In cases involving a remote computer, the remote computer may be connected to the user computer through any kind of network, including a local area network (LAN) or a wide area network (WAN), or it can be connected to an external computer (for example, through an Internet connected provided by an Internet service provider).

The flowchart and block diagrams in the drawings illustrate the architecture, functionality, and operation of possible implementations of systems, methods and computer program products according to various embodiments of the present disclosure. In this regard, each block in a flowchart or block diagram may represent a module, program segment, or portion of code that contains one or more logical functions for implementing specified executable instructions. It should also be noted that, in some alternative implementations, the functions noted in the block may occur out of the order noted in the drawings. For example, two blocks shown in succession may, in fact, be executed substantially concurrently, or they may sometimes be executed in the reverse order, depending upon the functionality involved. It should also be noted that each block of the block diagrams and/or flowcharts, and combinations of blocks in the block diagrams and/or flowcharts can be implemented by a dedicated hardware-based system that performs the specified functions or operations, or may be implemented by a combination of dedicated hardware and computer instructions.

The units involved in the embodiments described in the present disclosure may be implemented by software or by hardware, where the name of the unit/module does not constitute a limitation of the unit itself under certain circumstances.

The functions described herein above may be performed at least in part by one or more hardware logic components. For example, without limitation, exemplary types of hardware logic components that may be used include: a field programmable gate array (FPGA), an application specific integrated circuit (ASICs), an application specific standard product (ASSP), a system-on-chip (SOC), a complex programmable logical device (CPLD) and so on.

In the context of the present disclosure, a machine-readable medium may be a tangible medium that may contain or store a program for use by or in conjunction with an instruction execution system, apparatus, or device. The machine-readable medium may be a machine-readable signal medium or a machine-readable storage medium. The machine-readable medium may include, but not limited to, an electronic, magnetic, optical, electromagnetic, infrared, or semiconductor system, apparatus, or device, or any suitable combination of the above. More specific examples of the machine-readable storage medium may include one or more wire-based electrical connections, a portable computer disk, a hard disk, a random-access memory (RAM), a read-only memory (ROM), an erasable programmable read-only memory (EPROM or flash memory), an fiber optics, a compact disk read-only memory (CD-ROM), an optical storage device, a magnetic storage devices, or any suitable combination of the above.

It should be noted that the embodiments in this specification are described in a progressive manner, each embodiment focuses on the differences from other embodiments, and reference may be made to each other for the same and similar parts. As for the system or apparatus disclosed in the embodiments, since it corresponds to the method disclosed in the embodiments, the description is relatively simple, and reference may be made to the descriptions in the method embodiments for relevant details thereof.

It should be understood that in this disclosure, "at least one" means one or more, and "multiple" means two or more. "And/or" is used to describe the association relationship of associated objects, indicating that there can be three types of relationships, for example, "A and/or B" can mean: only A exists, only B exists, and both A and B exist at the same time, where A and B can be singular or plural. The character "/" generally indicates that the associated objects have an "or" relationship. "At least one of the following" or similar expressions refer to any combination of these items, including any combination of single or plural items. For example, at least one of a, b, or c can mean: a, b, c, "a and b", "a and c", "b and c", or "a and b and c ", where a, b, c may be singular or plural.

It should also be noted that in this disclosure, relational terms such as first and second are only used to distinguish one entity or operation from another entity or operation, and do not necessarily require or imply that any such actual relationship or order exists between these entities or operations. Furthermore, the term "comprise", "include" or any other variation thereof is intended to cover a non-exclusive inclusion such that a process, method, article, or apparatus including a set of elements includes not only those elements, but also includes elements not expressly listed, and elements inherent in such a process, method, article, or apparatus. Without further limitations, an element defined by the phrase "comprising a ..." does not exclude the presence of additional identical elements in the process, method, article or apparatus comprising the element.

The steps of the methods or algorithms described in conjunction with the embodiments disclosed herein may be directly implemented by hardware, software modules executed by a processor, or a combination of both. The software modules may be placed in a random-access memory (RAM), internal memory, read-only memory (ROM), electrically programmable ROM, electrically erasable programmable ROM, register, hard disk, removable disk, CD-ROM, or any other storage medium known in the art.

The above description of the disclosed embodiments enables any person skilled in the art to implement or use the present disclosure. Various modifications to these embodiments are readily apparent to those skilled in the art, and the general principles defined herein may be implemented in other embodiments without departing from the spirit or scope of the disclosure. Therefore, the present disclosure is not limited to the embodiments described, but is to be accorded the widest scope consistent with the principles and novel features disclosed herein.

## Claims

1. A method for displaying information, applied to a streamer client, wherein the method comprises:
displaying a live stream page, wherein at least one piece of first interaction information is displayed on the live stream page;
displaying an interaction information display page in response to a trigger operation on the live stream page, wherein the interaction information display page is used to display at least one piece of second interaction information, and the at least one piece of second interaction information comprises the at least one piece of first interaction information;
displaying a filter condition input interface, in response to a trigger operation on an information filter control on the interaction information display page; and
displaying, on the interaction information display page, third interaction information satisfying an information filter condition in the at least one piece of second interaction information, in response to a condition input operation triggered on the filter condition input interface, wherein the information filter condition is determined according to the condition input operation.

2. The method according to claim 1, wherein the filter condition input interface comprises at least one piece of candidate condition description information, and
the displaying, on the interaction information display page, third interaction information satisfying an information filter condition in the at least one piece of second interaction information, in response to a condition input operation triggered on the filter condition input interface comprises:
displaying, on the interaction information display page, the third interaction information satisfying the information filter condition in the at least one piece of second interaction information, in response to a selection operation on target condition description information in the at least one piece of candidate condition description information, wherein the information filter condition is determined according to the target condition description information.

3. The method according to claim 2, wherein the at least one piece of candidate condition description information comprises at least one of first condition description information, second condition description information, third condition description information, and fourth condition description information, wherein the first condition description information is used to describe a filter condition for searching for gift-giving interaction information in the at least one piece of second interaction information, the second condition description information is used to describe a filter condition for searching for gift-giving description information of at least one gift giver recorded in the at least one piece of second interaction information, the third condition description information is used to describe a filter condition for searching for interaction description information of at least one subscriber recorded in the at least one piece of second interaction information, and the fourth condition description information is used to describe a filter condition for searching for comment interaction information in the at least one piece of second interaction information.

4. The method according to claim 1, wherein the displaying, on the interaction information display page, third interaction information satisfying an information filter condition in the at least one piece of second interaction information, in response to a condition input operation triggered on the filter condition input interface comprises:
displaying, on the interaction information display page, the third interaction information satisfying the information filter condition in the at least one piece of second interaction information, in response to the condition input operation triggered on the filter condition input interface; and displaying a condition display control corresponding to the information filter condition, wherein display content on the condition display control is determined according to the information filter condition.

5. The method according to claim 4, wherein the filter condition input interface includes at least one piece of candidate condition description information, and
the displaying, on the interaction information display page, the third interaction information satisfying the information filter condition in the at least one piece of second interaction information, in response to the condition input operation triggered on the filter condition input interface; and displaying a condition display control corresponding to the information filter condition comprise:
displaying, on the interaction information display page, the third interaction information satisfying the information filter condition in the at least one piece of second interaction information, in response to a selection operation on at least one piece of target condition description information in the at least one piece of candidate condition description information; and displaying a condition display control corresponding to the target condition description information, wherein the information filter condition is determined according to the at least one piece of target condition description information, and display content on the condition display control corresponding to the target condition description information is determined according to the target condition description information; or
the displaying, on the interaction information display page, the third interaction information satisfying the information filter condition in the at least one piece of second interaction information, in response to the condition input operation triggered on the filter condition input interface; and displaying a condition display control corresponding to the information filter condition comprise:
displaying, on the interaction information display page, the third interaction information satisfying the information filter condition in the at least one piece of second interaction information, in response to a selection operation on at least one piece of target condition description information in the at least one piece of candidate condition description information; and displaying the condition display control corresponding to the information filter condition, wherein the information filter condition is determined according to the at least one piece of target condition description information, and display content on the condition display control corresponding to the information filter condition is determined according to the at least one piece of target condition description information.

6. The method according to claim 4, wherein after displaying the condition display control corresponding to the information filter condition, the method further comprises:
displaying the at least one piece of second interaction information on the interaction information display page and turning off the condition display control corresponding to the target condition description information, in response to a turn-off operation triggered on the condition display control corresponding to the information filter condition.

7. The method according to claim 6, wherein a turn-off control is displayed on the condition display control, and
the displaying the at least one piece of second interaction information on the interaction information display page and turning off the condition display control corresponding to the target condition description information, in response to a turn-off operation triggered on the condition display control corresponding to the information filter condition comprise:
displaying the at least one piece of second interaction information on the interaction information display page and turning off the condition display control corresponding to the target condition description information, in response to a trigger operation on the turn-off control on the condition display control corresponding to the information filter condition.

8. The method according to claim 7, wherein at least one management control is further displayed on the condition display control, and the management control is used to adjust a display state of the condition display control on the interaction information display page.

9. The method according to claim 4, wherein a display position of the condition display control on the interaction information display page and a display position of the information filter control on the interaction information display page satisfy a preset position relationship.

10. The method according to claim 1, wherein the filter condition input interface comprises at least one piece of candidate condition description information,
the information filter condition is determined, according to N pieces of target condition description information selected from the at least one piece of candidate condition description information, wherein N is a positive integer, and
a filtering process for the third interaction information comprises:
determining an n-th condition according to an n-th piece of target condition description information, wherein n is a positive integer and n≤N;
filtering the at least one piece of second interaction information according to the n-th condition, to obtain second interaction information satisfying the n-th condition, wherein n is a positive integer and n≤N; and
determining the second interaction information satisfying the n-th condition, as the third interaction information, wherein n is a positive integer and n≤N.

11. The method according to claim 1, wherein the displaying a filter condition input interface comprises:
displaying the filter condition input interface in a second region of the interaction information display page, and
the method further comprises:
removing display of the filter condition input interface, in response to a trigger operation on a third region of the interaction information display page, where there is no overlapping region between the third region and the second region.

12. The method according to claim 1, where after displaying the filter condition input interface, the method further comprises:
removing display of the filter condition input interface, in response to a trigger operation on the information filter control on the interaction information display page.

13. The method according to claim 1, wherein the interaction information display page comprises a first interaction display region,
the first interaction display region is used to display, in an information update display manner, all fourth interaction information satisfying a preset display condition in the at least one piece of second interaction information, in a case that an information co-occurrence parameter of the first interaction display region satisfies a preset parameter condition, and
after displaying the interaction information display page, the method further comprises:
updating interaction information displayed in the first interaction display region, in response to an information update operation triggered on the first interaction display region.

14. The method according to claim 13, wherein the interaction information display page further comprises a second interaction display region and/or a third interaction display region, wherein the second interaction display region is used to display gift-giving interaction information satisfying a preset gift condition in the at least one piece of second interaction information, and the third interaction display region is used to display live streaming interaction information satisfying a preset interaction condition in the at least one piece of second interaction information.

15. The method according to claim 13, wherein after updating the interaction information displayed in the first interaction display region, the method further comprises:
displaying an information prompt object on the interaction information display page, after receiving fifth interaction information satisfying a preset information condition.

16. The method according to claim 15, wherein after displaying the information prompt object on the interaction information display page, the method further comprises:
updating the interaction information displayed in the first interaction display region with the fifth interaction information, in response to a trigger operation on the information prompt object.

17. The method according to claim 15, wherein a third interaction display region is further displayed on the interaction information display page, wherein the third interaction display region is used to display live streaming interaction information satisfying a preset interaction condition in the at least one piece of second interaction information, and
the displaying an information prompt object on the interaction information display page comprises:
displaying the information prompt object in the third interaction display region.

18. The method according to any one of claims 1 to 17, wherein displaying an interaction information display page comprises:
displaying the interaction information display page on the live stream page in a preset page display manner.

19. An apparatus for displaying information, comprising:
a first display unit configured to display a live stream page, wherein at least one piece of first interaction information is displayed on the live stream page;
a second display unit configured to display an interaction information display page, in response to a trigger operation on the live stream page, wherein the interaction information display page is used to display at least one piece of second interaction information, and the at least one piece of second interaction information includes the at least one piece of first interaction information;
a third display unit configured to display a filter condition input interface, in response to a trigger operation on an information filter control on the interaction information display page; and
a fourth display unit configured to display, on the interaction information display page, third interaction information satisfying an information filter condition in the at least one piece of second interaction information, in response to a condition input operation triggered on the filter condition input interface, wherein the information filter condition is determined according to the condition input operation.

20. An electronic device, comprising: a processor and a memory,
wherein the memory is configured to store instructions or computer programs, and
the processor is configured to execute the instructions or computer programs in the memory, to cause the electronic device to perform the method for displaying the information according to any one of claims 1 to 18.

21. A computer-readable medium with instructions or computer programs stored thereon, wherein the instructions or computer programs, when executed on a device, cause the device to implement the method for displaying the information according to any one of claims 1 to 18.

22. A computer program product, comprising a computer program carried on a non-transitory computer-readable medium, where the computer program comprises program codes for performing the method for displaying the information according to any one of claims 1 to 18.
